# EUROPEAN PATENT APPLICATION

(11) **EP 4 838 883 A1**
(43) Date of publication of application: **11.11.2026**
(21) Application number: 25305650.1
(22) Date of filing: 07.05.2025
(51) Int. Cl.: H04N 19/117, G06N 3/06, H04N 19/156, H04N 19/70, H04N 19/82

(54) **INFORMATION OF COMPLEXITY AND ENERGY CONSUMPTION ON PARTS OF NNPFS**

(71) Applicant: InterDigital CE Patent Holdings, SAS, 75017 Paris (FR)
(72) Inventor: DEMARTY, Claire-Helene, 35520 MONTREUIL LE GAST (FR); FRANCOIS, Edouard, 35890 BOURG DES COMPTES (FR); AUMONT, Franck, 35770 VERN SUR SEICHE (FR); BLONDE, Laurent, 35235 THORIGNE-FOUILLARD (FR)
(74) Representative: AWA Sweden AB

(57) **Abstract**

In one implementation, a method is presented, comprising: obtaining a plurality pieces of information for a first neural network, wherein each piece of the plurality pieces of information indicates at least one of complexity and energy associated with a structure part of a plurality of structure parts of the first neural network; accessing at least one of available computing resources and available energy of the device; and responsive to determining a subset of structure parts of the first neural network satisfies a constraint of the at least one of available computing resources and available energy of the device, processing the video with a second neural network, wherein the second neural network only includes the subset of structure parts of the first neural network.

## Description

### BACKGROUND

The present application is related to Neural Network Post Filter (NNPF) in video compression. In particular, it relates to the complexity of implementation and running of the NNPF and to the energy needed to run the NNPF and as a consequence of applying the NNPF.

### BRIEF SUMMARY

Briefly stated, in one embodiment, a method of video decoding is presented, comprising: obtaining a plurality pieces of information for a first neural network, wherein each piece of the plurality pieces of information indicates at least one of complexity and energy associated with a structure part of a plurality of structure parts of the first neural network; accessing at least one of available computing resources and available energy of the device; and responsive to determining a subset of structure parts of the first neural network satisfies a constraint of the at least one of available computing resources and available energy of the device, processing the video with a second neural network, wherein the second neural network only includes the subset of structure parts of the first neural network.

In another embodiment, an apparatus for video decoding is presented, comprising one or more processors and at least one memory coupled to the one or more processors, wherein the one or more processors are configured to: obtain a plurality pieces of information for a first neural network, wherein each piece of the plurality pieces of information indicates at least one of complexity and energy associated with a structure part of a plurality of structure parts of the first neural network; access at least one of available computing resources and available energy of the apparatus; and responsive to determining a subset of structure parts of the first neural network satisfies a constraint of the at least one of available computing resources and available energy of the device, process the video with a second neural network, wherein the second neural network only includes the subset of structure parts of the first neural network.

In another embodiment, a method of video encoding is presented, comprising: dividing a neural network into a plurality of structure parts; signaling the plurality of structure parts of the neural network; and signaling a plurality pieces of information for the neural network, wherein each piece of the plurality pieces of information indicates at least one of complexity and energy consumption associated with a structure part of the plurality of structure parts of the neural network.

In another embodiment, an apparatus for video encoding is presented, comprising one or more processors and at least one memory coupled to the one or more processors, wherein the one or more processors are configured to: divide a neural network into a plurality of structure parts; signal the plurality of structure parts of the neural network; and signal a plurality pieces of information for the neural network, wherein each piece of the plurality pieces of information indicates at least one of complexity and energy consumption associated with a structure part of the plurality of structure parts of the neural network.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a block diagram illustrating an example system according to one or more embodiments of the present disclosure;
FIG. 2 is a block diagram illustrating an example video encoder according to one or more embodiments of the present disclosure;
FIG. 3 is a block diagram illustrating an example video decoder according to one or more embodiments of the present disclosure;
FIG. 4 illustrates signalling of parts of the NNPF structure and their individual complexity/energy information in a NNPFC SEI message, and the application of all or parts of the NNPF depending on this information, according to one or more embodiments of the present disclosure;
FIG. 5 illustrates the update of the NNPF structure by delta complexity/energy information sent in a NNPFC SEI message, and the application of the original or the updated NNPF depending on this information, according to one or more embodiments of the present disclosure;
FIG. 6 illustrates the update of the NNPF structure by update (or delta) complexity/energy information sent in a NNPFA SEI message, and the application of the original or the updated NNPF depending on this information, according to one or more embodiments of the present disclosure;
FIG. 7 illustrates the update of parts of the NNPF structure and corresponding individual complexity/energy related information per updated part or as deltas of complexity/energy per updated part in a NNPFC SEI message, and the application of all or parts of the updated NNPF depending on this information, according to one or more embodiments of the present disclosure;
FIG. 8 illustrates the update of parts of the NNPF structure and corresponding individual complexity/energy related information per updated part or as deltas of complexity/energy per updated part in a NNPFA SEI message, and the application of all or parts of the updated NNPF depending on this information, according to one or more embodiments of the present disclosure;
FIG. 9 illustrates a method of updating the NNPF structure at the encoder side, according to one or more embodiments of the present disclosure;
FIG. 10 illustrates a method of applying the NNPF structure at the decoder side, according to one or more embodiments of the present disclosure; and
FIG. 11 illustrates a method of updating the NNPF structure at the decoder side, according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

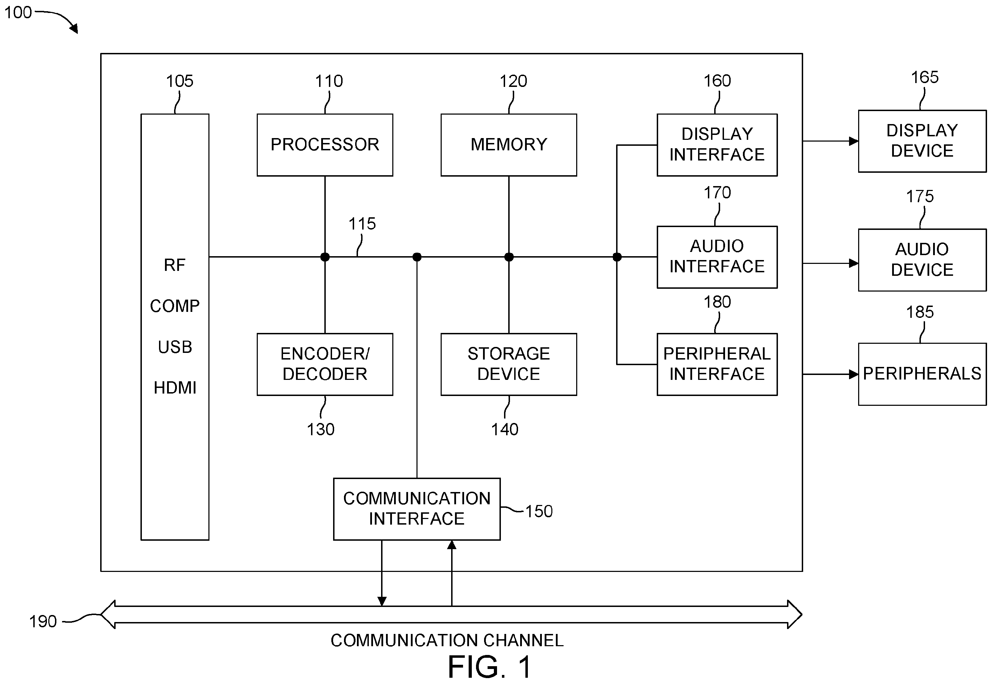

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

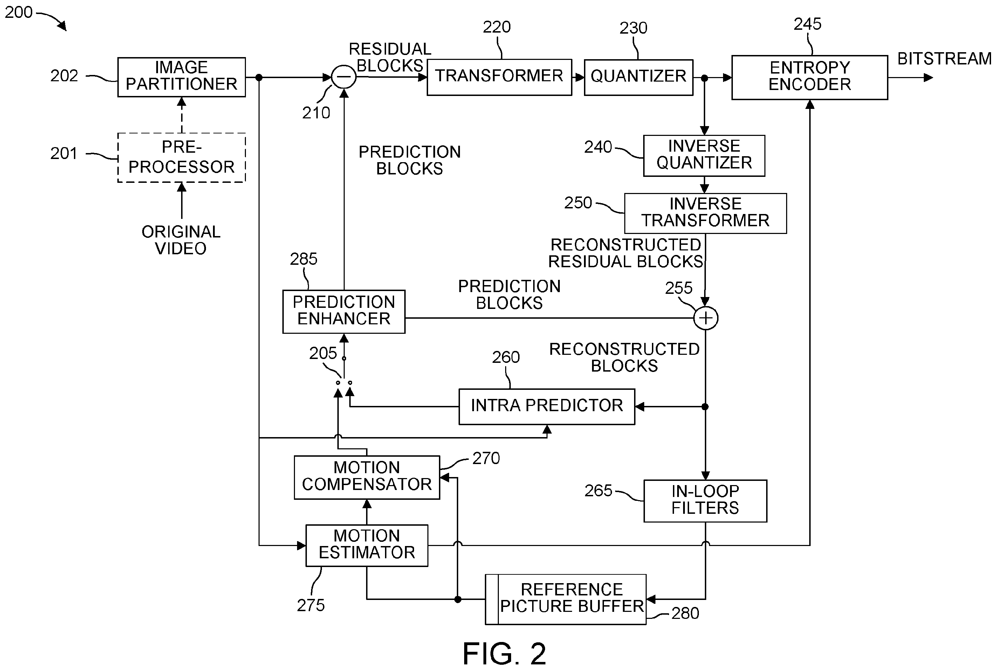

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

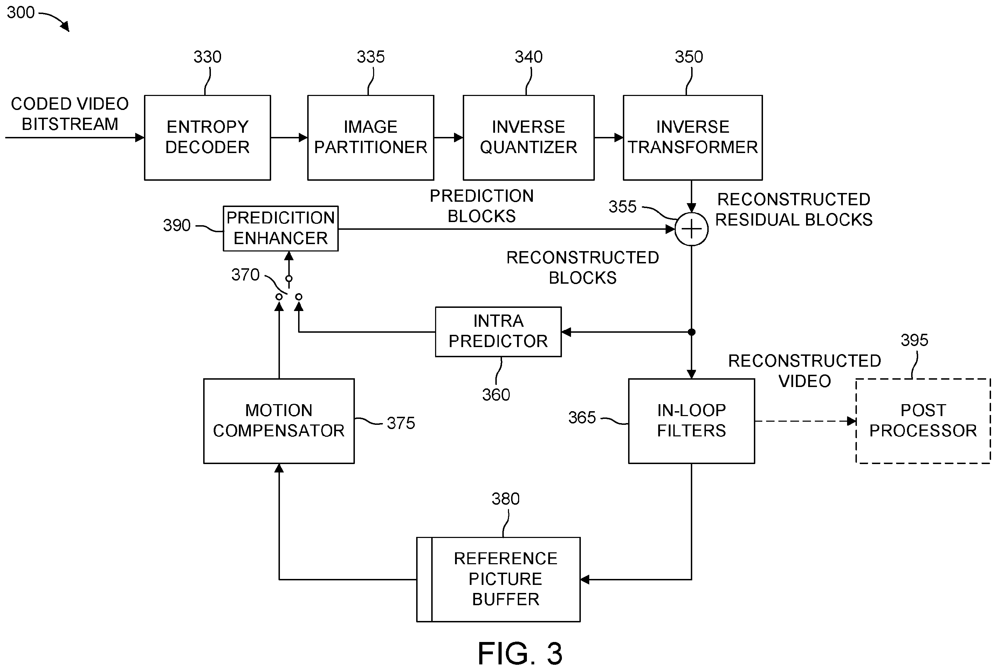

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by *C*)*.*

Referring generally to FIG. 2 and the video encoder 200, video data (e.g., one or more video frames) is encoded generally as described below. Prior to encoding, video data may be pre-processed by a precoding processor (201). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (395) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream. The post-decoding processor (395) can also perform post-processing filtering, for example, using a neural-network based post-filter.

The neural-network post-filter characteristics (NNPFC) SEI message specifies a neural network that may be used as a post-processing filter. In particular, the NNPFC SEI message allows an encoder to define a neural network to be used in a post-processing operation after the decoding operation. This message also specifies the input and output of the neural network and describes its complexity.

The NNPFC SEI message indicates the intended purpose of the neural network. Up to now, 9 modes have been defined:
- Enhancing visual quality
- Chroma upsampling
- Changing spatial resolution, e.g., from high-definition decoded video to ultra-high definition
- Upsampling picture rate, e.g., from 30 Hz to 60 Hz
- Upsampling bit depth to increase the dynamic range of pixel values
- Colorization to convert monochrome video to full colors.
- Temporal extrapolation
- Spatial extrapolation
- Tone mapping

These modes are also described in the following table (cf. Table 1) extracted from an article by S. McCarthy et al., entitled "Technologies under consideration for future extensions of VSEI (version 7)," document JVET-AK2032, 37th JVET Meeting, 2025.

**Table 1: Definition of nnpfc_purpose extracted from JVET-AK2032.**

| **bitMask** | **Interpretation** |
|---|---|
| 0x01 | General visual quality improvement |
| 0x02 | Chroma upsampling (from the 4:2:0 chroma format to the 4:2:2 or 4:4:4 chroma format, or from the 4:2:2 chroma format to the 4:4:4 chroma format) |
| 0x04 | Resolution resampling (increasing or decreasing the width or height) |
| 0x08 | Picture rate upsampling |
| 0x10 | Bit depth upsampling (increasing the luma bit depth or the chroma bit depth) |
| 0x20 | Colourization |
| 0x40 | Temporal extrapolation (i.e., generating one or more future pictures) |
| 0x80 | Spatial extrapolation (i.e., generating content outside of the spatial area of the input pictures) |
| 0x100 | Tone mapping (i.e., modification of the colour samples values, in terms of contrast, colour, saturation, luminance) |

The use of specified neural-network post-processing filters (NNPFs) for specific pictures is indicated with neural-network post-filter activation (NNPFA) SEI messages. An NNPFC SEI message, to be applied, needs to be activated by an NNPFA SEI message. The use for specific pictures of a neural-network post-processing filter specified in an NNPFC SEI message is indicated with one or more neural-network post-filter activation (NNPFA) SEI messages related to these pictures. The NNPFA SEI is used to activate an NNPFC SEI.

It is proposed in JVET-AL0076 (see an article by M. Hannuksela et al., entitled "AHG9: On multi-purpose NNPFs," Document: JVET-AL0076, Joint Video Experts Team (JVET) of ITU-T SG 21 WP 3 and ISO/IEC JTC 1/SC 29 38th Meeting, by teleconference, 26 March - 4 April 2025) to update the purposes of an NNPF by sending some information in the NNPFA SEI message related to the new list of purposes.

It is proposed in JVET-AL0159 (see an article by F. Cricri et al., entitled "AHG9: On backbone and tail of NNPFs," Document: JVET-AL0159, Joint Video Experts Team (JVET) of ITU-T SG 21 WP 3 and ISO/IEC JTC 1/SC 29 38th Meeting, by teleconference, 26 March - 4 April 2025) to distinguish two parts in the NNPF's architecture between a back-bone part and a tail part of the architecture. Both parts together correspond to the full architecture of the NNPF. The advantage of providing the NNPF's architecture in two parts is that one part can be replaced by another version, for example another NNPF's tail, which enables to improve the network or to change its purpose.

In a commonly owned EP Patent Application entitled "Signalling and Update of a Neural Network Post Filter" (our docket number 2025P00247EP), it is further proposed to extend the split of the NNPF structure to more than two parts and to provide the possibility to update one or more parts of the NNPF structure either in the NNPFC SEI message or in the NNPFA SEI message.

In the following, the NNPF structure is defined to correspond to both the NNPF's architecture in terms of layers, activation units, etc. and the NNPF's set of weights and parameters.

In case the NNPF's structure can be defined using several parts, different complexity and energy information can be specified depending on each part. When energy information is concerned it is to be understood that it corresponds to either the energy needed to run the NNPF as a whole or per part, or the energy needed in the subsequent steps after applying the NNPF, as a consequence of having applied the NNPF on the content. In another variant, energy information corresponds to the sum between both the energy needed to run the NNPF as a whole or per part, AND the energy needed in the subsequent steps after applying the NNPF, as a consequence of having applied the NNPF on the content. When complexity information is concerned, it is to be understood that it corresponds to all information related to the amount of computing resources (in terms of time and space) needed to run the NNPF.

In the following, we usually refer to signalling of both the complexity and energy information. However, it is to be understood that complexity or energy information alone can be specified and signalled. It is to be understood that any (at least one) metadata expressing a piece of information related to complexity or energy can be signalled in the proposed embodiment.

Furthermore, if some part of the NNPF's structure is changed, its complexity in terms of number of parameters, number of MACs (multiplying-accumulating operations), and in terms of energy information might change also.

In this document, we propose to distinguish and provide information on the complexity and energy per part of the NNPF's architecture. We also propose to provide information on the complexity and energy when an update of the NNPF occurs, possibly through an update of the NNPF's purpose.

The complexity and energy consumption of a neural network depend, among others, on its structure, that is, its architecture, weights and parameters. It may depend, for example, on the NNPF architecture. On a change of architecture, the complexity and the energy consumption are likely to change. It may also depend on the NN weights, for example their sparsity or the number of weights equal to 1. On a change of weights, the complexity and the energy consumption are likely to change.

Therefore, replacing part of the NNPF's layers by some other layers, for example, replacing the tail of an NNPF, i.e., the last layers before the output of the NNPF, will change part of the architecture of the NNPF, thus its complexity and its energy consumption. Such a change of architecture may occur in correlation with a change of purpose of the NNPF, i.e., the task it was trained on may change. Such a change may be accompanied with a change of weights.

At least one problem to solve is to inform the decoder upon a change of structure and/or NNPF purpose of the corresponding complexity and/or energy consumption. Another problem to solve is to signal individual complexity and energy consumption depending on parts of the NNPF structure.

### Information of complexity in the NNPFC SEI message

The NNPFC SEI message enables to have an overview of the complexity of the NNPF in terms of number of parameters, number of multiplying-accumulating operations (MACs), etc. (see JVET-AK2032). Such complexity information is related to the full NNPF's architecture.

| | |
|---|---|
| ... | |
| if( nnpfc_inp_order_idc != 0 ) { | |
| **nnpfc_cb_padding_val** | ue(v) |
| **nnpfc_cr_padding_val** | ue(v) |
| } | |
| } | |
| **nnpfc_complexity_info_present_flag** | u(1) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_idc** | u(6) |
| **nnpfc_num_kmac_operations_idc** | ue(v) |
| **nnpfc_total_kilobyte_size** | ue(v) |
| } | |
| **nnpfc_num_metadata_extension_bits** | ue(v) |
| if( nnpfc_num_metadata_extension_bits > 0 ) { | |
| if( nnpfc_purpose = = 0 ) { | |
| **nnpfc_application_purpose_tag_uri_present_flag** | u(1) |
| if( nnpfc_application_purpose_tag_uri_present_flag ) { | |
| ... | |

On the other hand, in commonly owned EP Patent Application Nos. 24306109.0 (our docket number 2024P00455EP), 24306106.6 (our docket number 2024P00454EP), 24306105.8 (our docket number 2024P00453EP), 24306781.6 (our docket number 2024P00787EP), it is proposed to send some energy consumption information, again related to the full NNPF's structure. In each case, the information of the complexity or energy consumption of parts of the NNPF's structure is not available.

### Text of JVET-AL0076 for updating purposes of an NNPF

Further in JVET-AL0076, it is proposed to update the purposes of a given NNPF, potentially a multipurpose NNPF. In the corresponding new syntax, it clearly appears that the only new information signaled in the NNPFA is related to the new updated purpose.

When the purpose of a NNPF is updated by sending (at encoder side)/receiving (at decoder side) a new NNPFA SEI message, in a commonly owned EP Patent Application No. 25305414.2 entitled "Updating NNPF Related Information in NNPFA Upon Update of the NNPF Purposes" (our docket number 2025P00203EP), it is proposed to send in the NNPFA SEI message, information related to all metadata that need to be updated subsequently to the update on one or more of the purposes of a given NNPF, for the NNPF to work properly and for the output of the NNPF to be properly interpreted by subsequent processings after the NNPF, for example, other post processings, machine analysis or rendering on displays.

In particular, what is sent is information related to the output sizes, the resampling ratio numerator, the resampling ratio denominator, the output chroma or colour format and the sizes of the chroma channels, the number of interpolated pictures between two input pictures, the number of extrapolated pictures, the sizes used for computing the spatial extrapolation of the input pictures, the preferred display method for the pictures output by the NNPF.

No information is related to the updated complexity or the updated energy consumption of the NNPF once its purpose has been updated.

### 2025P00150EP - signalling of complexity and energy related information in the NNPFC SEI message

In a commonly owned EP Patent Applicant No. 25305355.7 entitled "Adding Architecture-Related Information to Neural Network Post Filters" (our docket number 2025P00150EP), it is proposed to signal information on the energy consumption and complexity of a neural network such as the sparsity of the network, the number of weights equal to one, the size of the receptive field, the compatibility with a list of data types, the maximal layer size, or a simplified network architecture. However, this information is sent for the whole network structure.

A neural network's structure may consist of several parts, for example at least one backbone and one tail. Each of these parts has its own complexity (in terms of, for example, the number of parameters, the number of MACs, the size of memory, etc.) and induced its own energy consumption.

Upon a change of a part of the structure (either the architecture or the weights), the complexity and the energy consumption of this part may change.

A NNPF may have been trained for several purposes, i.e., tasks. By modifying its structure, in particular, its tail, it is possible to update the NNPF's purposes. Subsequently, depending on a change of purpose, a change of complexity and of energy consumption may occur.

In JVET-AL0159 and 2025P00247EP, the NNPFC SEI message enables access to different parts of the NNPF architecture independently. It is therefore possible to change part of the architecture of the NNPF. The NNPFA SEI message enables the purposes of a neural network to be updated, for example, through a change of structure.

We propose to add in the NNPFC SEI message information related to the complexity and energy information of parts of the NNPF structure, e.g., architecture or weights.

Upon an update of neural network's purpose, or a change of structure (for example, a change of architecture), we also propose to add the possibility to update the complexity information and energy consumption in the NNPFA SEI message.

Some embodiments are as follows:
- Emb.1 - Signalling of complexity/energy per part of the NNPF structure in the NNPFC SEI message. When the structure of the NNPF is described as several individual parts in the NNPFC SEI message, information related to the complexity and energy consumption of each part is signalled in the NNPFC SEI message.
- Emb.2 - Upon update of the global NNPF structure in the NNPFC or NNPFA SEI messages, signalling of updated complexity/energy information:
   ∘ Emb.2Variant.1 - Signalling of the complexity/energy deltas compared to the previous values in the NNPFC SEI message.
   ∘ Emb.2.Variant.2 - Signalling of the complexity/energy deltas compared to the previous values in the NNPFA SEI message.
   ∘ Emb.2.Variant.3 - Signalling of the updated global complexity/energy in the NNPFA SEI message
- Emb.3 - Upon update of a part of the NNPF structure in the NNPFC or NNPFA SEI messages, signalling of updated complexity/energy information:
   ∘ Emb.3.Variant.1 - Signalling of the complexity/energy of the updated part in the NNPFC SEI message. When at least one part of the structure of the NNPF is changed in the NNPFC SEI message, information related to the complexity and energy consumption of this part is signalled and updated in the NNPFC SEI message.
   ∘ Emb.3.Variant.2 - Signalling of the complexity/energy deltas for the updated part compared to the previous values in the NNPFC SEI message
   ∘ Emb.3.Variant.3 - Signalling of the complexity/energy of the updated part in the NNPFA SEI message. When (at least one part of the structure of the NNPF is changed in the NNPFC or NNPFA SEI messages, information related to the complexity and energy consumption of this part is signalled and updated in the NNPFA SEI message.
   ∘ Emb.3.Variant.4 - Signalling of the complexity/energy deltas for the updated part compared to the previous values in the NNPFA SEI message
   ∘ Emb.3.Variant.5 - Signalling of the updated whole complexity/energy in the NNPFA SEI message
   ∘ Emb.3.Variant.6 - Signalling of the complexity/energy delta for the whole structure in the NNPFA SEI message
- Emb.4 - Upon update of the NNPF's purpose, signalling of updated complexity/energy information:
   o Emb.4. Variant.1 - Signalling of the updated complexity/energy in the NNPFC SEI message. When the purpose of the NNPF is updated in the NNPFC SEI message, information related to the updated complexity and energy consumption is signalled in the NNPFC SEI message.
   ∘ Emb.4. Variant.2 - Signalling of the updated complexity/energy in the NNPFA SEI message. When the purpose of the NNPF is updated in the NNPFC or NNPFA SEI messages, information related to the updated complexity and energy consumption is signalled in the NNPFA SEI message.
   ∘ Emb.4.Variant.3 - Signalling of the complexity/energy deltas in the NNPFC SEI message.
   o Emb.4.Variant.4 - Signalling of the complexity/energy deltas in the NNPFA SEI message.
- Emb.5 - Upon update of the NNPF's purpose, and when the update of purpose corresponds to an update of the structure, signalling of updated complexity/energy information:
   ∘ Emb.5. Variant.1 - Signalling of the complexity/energy of the updated part in the NNPFC SEI message. When the purpose of the NNPF is updated in the NNPFC SEI message and when the update of purpose corresponds to an update of structure, the complexity and energy information of the updated part of the structure is signalled in the NNPFC SEI message.
   ∘ Emb.5.Variant.2 - Signalling of the complexity/energy of the updated part in the NNPFA SEI message. When the purpose of the NNPF is updated in the NNPFC or NNPFA SEI messages and when the update of purpose corresponds to an update of structure, the updated complexity and energy information is signalled in the NNPFA SEI message.
   ∘ Emb.5.Variant.3 - Signalling of the complexity/energy deltas in the NNPFC SEI message
   ∘ Emb.5.Variant.4 - Signalling of the complexity/energy deltas in the NNPFA SEI message

### Splitting into one or more parts

In the present document, the problem is related to send complexity and/or energy information related to an NNPF, considering that the NNPF structure may potentially be split and therefore described either as a whole or as several parts.

In the following embodiments, three different splits may be envisioned: the NNPF structure is signalled as one single part, the NNPF structure is signalled as two parts, classically denoted as backbone and tail or backbone and head, and the NNPF structure is signalled as a list of (more than two) parts. Parts of the structure may correspond to a backbone and a tail (or head). They may correspond to each individual layer, to a group of layers. They may correspond to more complex splits of the architecture than layers. Any grouping of elements of the structure may result in a part and may be considered. It is to be understood that these three splits of the NNPF structure are considered in the following embodiments.

The split into different parts of the NNPF structure may be signalled through different means, for example a list of URIs, or a list of sub-bitstreams as discussed in 2025P00247EP. It is to be understood that the present embodiments apply for different means of signalling the NNPF structure as different parts and that signalling as URIs or sub-bistreams do not constitute an exhaustive list of the different means that may be envisioned.

### Information related to complexity and/or energy of the NNPF

In the present document, the problem is related to sending complexity and/or energy information related to running a neural network or related to the subsequent steps after having applied the neural network.

For example, depending on whether a neural network for resolution upsampling is applied or not, the subsequent steps after running such a neural network, for example, another neural network for quality enhancement may consume more energy or may have a higher complexity. In this example, this is due to the processing of images of a higher resolution following the first step of resolution upsampling. In another example, if a neural network for the creation of energy aware images is applied, i.e., a neural network for the modification of images that will consume less while displayed, as a consequence, the subsequent step of rendering on a display such processed images will result in less energy consumption by the display device.

For the present document, any information related to describing the complexity and/or the energy consumption of running a neural network or as a consequence of running a neural network is concerned. In the following, the energy is often taken as example when describing information for running a neural network or as a consequence of running a neural network. However, it is to be understood that this applies also for the complexity, i.e., the complexity of running a neural network or the complexity of running the subsequent steps as a consequence of running a neural network. For example, it may be envisioned to send information related to the number of parameters, number of operations (e.g., number of multiplication-accumulation operations (MACs)), the size of the needed memory, the data types of the parameters, the sparsity of the network, the number of weights equal to one, the size of the receptive field(s), the compatibility with a list of data types, the maximal layer size, or a simplified network architecture of the neural network part or any architecture-related information. Additionally, or optionally, it may be envisioned to signal energy consumption information, for example, energy consumption of running the neural network or energy consumption as a consequence of running the neural network in the subsequent steps in the video chain, such as additional post-processings, machine analysis processing of the content, or rendering on a display, or a sum of both the energy consumption of running the neural network and the energy consumption as a consequence of running the neural network in the subsequent steps in the video chain.

In the following embodiments, it is be understood that all the listed pieces of information above may serve as examples of the type of information that is signalled, although this list is not exhaustive and other types of information related to the complexity or energy related to running a neural network may be envisioned.

For each of these pieces of information related to complexity or energy, it is to be understood that they may concern either the whole (updated or not) NNPF structure or individual (updated or not) parts (i.e., one piece of information for each type is sent per part). These pieces of information may also represent deltas (i.e., differences) between the updated and original global structure or between the updated and original parts.

In the following, depending on the above alternatives, the semantics for the pieces of information as syntax elements in an NNPFC or NNPFA SEI message is described.

### Semantics for the NNPFC SEI message

### Syntax elements correspond to parts of the NNPF structure

The semantics of the proposed syntax elements per part of the NNPF structure are described below. Similar semantics can be derived when the NNPF's structure is to be defined with only two parts (backbone and tail).

**nnpfc_structure_split_complexity_info_present_flag[ i** ] specifies whether some information related to the complexity of the part of index i of the neural network is present. *When nnpfc_base_flag equals to 0, nnpfc_structure_split_complexity_info_present_flag[ i ] indicates information related to the update of part of index i.* nnpfc_structure_split_complexity_info_present_flag[ i ] equal to 1 specifies that some information related to the complexity of the part of index i of the neural network is present. nnpfc_structure_split_complexity_info_present_flag[ i ] equal to 0 specifies that some information related to the complexity of the part of index i of the neural network is not present.

**nnpfc_structure_split_parameter_type_idc[ i ]** equal to 0 indicates that the part of index i of the neural network uses only integer parameters. nnpfc_structure_split_parameter_type_idc[ i ] equal to 1 indicates that the part of index i of the neural network may use floating point or integer parameters. nnpfc_structure_split_parameter_type_idc[ i ] equal to 2 indicates that the part of index i of the neural network uses only binary parameters. *When nnpfc_base_flag equals to 0, nnpfc_structure_split_parameter_type_idc[ i ] indicates information related to the type of parameters of the update of part of index i.*

**nnpfc_structure_split_log2_parameter_bit_length_minus3[ i ]** equal to 0, 1, 2, and 3 indicates that the part of index i of the neural network does not use parameters of bit length greater than 8, 16, 32, and 64, respectively. When nnpfc_structure_split_parameter_type_idc[ i ] is present and nnpfc_structure_split_log2_parameter_bit_length_minus3 is not present, the part of index i of the neural network does not use parameters of bit length greater than 1. *When nnpfc_base_flag equals to 0,* nnpfc_structure_split_parameter_type_idc[ i ] *indicates information related to the parameters' bit length of the update of part of index i.*

**nnpfc_structure_split_num_parameters_idc[ i** ] indicates the maximum number of the neural network's parameters for the part of index i of the NNPF in units of a power of 2 scaled by 2048. nnpfc_structure_split_num_parameters_idc[ i ] equal to 0 indicates that the maximum number of neural network parameters is unknown for the part of index i. The value nnpfc_structure_split_num_parameters_idc[ i ] shall be in the range of 0 to 52, inclusive. *When nnpfc_base_flag equals to 0, nnpfc_structuresplit_num_parameters_idc[ i ] indicates information related to the maximum number of the update of part of index i.*

If the value of nnpfc_structure_split_num_parameters_idc[ i ] is greater than zero, the variable maxNumParameters[ i ] is derived as follows: $maxNumParameters \left[i\right] = \left(2 048≪nnpfc_structure_split_num_parameters_idc\left[i\right]\right) - 1$

**nnpfc_structure_split_num_kmac_operations_idc[ i** ] greater than 0 indicates that the maximum number of multiply-accumulate operations per sample of the part of index i of the NNPF is less than or equal to nnpfc_structure_split_num_kmac_operations_idc[ i ] * 1 000. nnpfc_structure_split_num_kmac_operations_idc[ i ] equal to 0 indicates that the maximum number of multiply-accumulate operations of the part of index i of the network is unknown. The value of nnpfc_structure_split_num_kmac_operations_idc[ i ] shall be in the range of 0 to 2³² - 2, inclusive. *When nnpfc_base_flag equals to 0, nnpfc_structure_split_num _kmac_operations_idc[ i ] indicates information related to the maximum number of multiply-accumulate operations per sample of the update of part of index* i.

**nnpfc_structure_split_total_kilobyte_size[ i ]** greater than 0 indicates a total size in kilobytes required to store the uncompressed parameters for the part of index i of the neural network. The total size in bits is a number equal to or greater than the sum of bits used to store each parameter. nnpfc_structure_split_total_kilobyte_size[ i ] is the total size in bits divided by 8 000, rounded up. nnpfc_structure_split_total_kilobyte_size[ i ] equal to 0 indicates that the total size required to store the parameters for the part of index i of the neural network is unknown. The value of nnpfc_structure_split_total_kilobyte_size[ i ] shall be in the range of 0 to 2³² - 2, inclusive. *When nnpfc_base_flag equals to 0,* nnpfc_structure_split_total_kilobyte_size[ i ] *indicates information related to the total size in kilobytes required to store the uncompressed parameters for the update of part of index i.*

**nnpfc_structure_split_non_null_weights[ i ]** indicates the (for example maximum) number of non null weights of the part of index i of the neural network. This number is indicated in units of a power of 2 scaled by 2048. nnpfc_structure_split_non_null_weights[ i ] equal to 0 indicates that the (for example maximum) number of non null weights of the part of index i of the neural network is unknown. The value nnpfc_structure_split_non_null_weights[ i ] is in the range of 0 to 52, inclusive. *When nnpfc_base_flag equals to 0, nnpfc_structure_split_non_null_weights[ i ] indicates information related to the number of non null weights of the update of part of index i.*

If the value of nnpfc_structure_split_non_null_weights[ i ] is greater than zero, the variable numNonNullWeights[ i ] is derived as follows: $numNonNullWeights \left[i\right] = \left(2 048≪nnpfc_structure_split_non_null_weights\right) - 1$

As an alternative, or together with the above metadata, the sparsity of the neural network may be indicated by the following metadata.

**nnpfc_structure_split_sparsity_idc[ i ]** indicates the sparsity of the part of index i of the neural network as a percentage of its parameters. nnpfc_structure_split_sparsity_idc[ i ] equal to 0 indicates that the sparsity of the part of index i of the neural network is unknown. *When nnpfc_base_flag equals to 0,* nnpfc_structure_split_sparsity_idc[ i ] *indicates information related to the sparsity of the update of part of index i.* This value is in the range 0 and 100 and coded over 7 bits. As an alternative it may be coded according to the following table (in this case the nnpfc_structure_split_sparsity_idc[ i ] is coded over 2 bits):

| **nnpfc_structure_split_sparsity_idc**[ i ] | **Interpretation** |
|---|---|
| 0 | The sparsity is in [0%, 5%) |
| 1 | The sparsity is in [5%, 10%) |
| 2 | The sparsity is in [10%, 20%) |
| 3 | The sparsity is above 20% |

**nnpfc_structure_split_weights_equal_one[ i ]** indicates the (for example, maximum) number of weights equal to 1 in the part of index i of the neural network. This number is indicated in units of a power of 2 scaled by 2048. nnpfc_structure_split_weights_equal_one[ i ] equal to 0 indicates that the (for example maximum) number of weights equal to 1 of the part of index i of the neural network is unknown. The value nnpfc_structure_split_weights_equal_one[ i ] is in the range of 0 to 52, inclusive. *When nnpfc_base_flag equals to 0, nnpfc_structure_split_weights_equal_one[ i ] indicates information related to the number of weights equal to 1 in the update of part of index i.*

If the value of nnpfc_structure_split_weights_equal_one[ i ] is greater than zero, the variable numWeightsEqualOne [ i ] is derived as follows: $numWeightsEqualOne \left[i\right] = \left(2 048≪nnpfc_structure_split_weights_equal_one\right) - 1$

Similarly to nnpfc_structure_split_sparsity_idc[ i ], and as an alternative, or together with the above metadata, the proportion in the part of index i of the neural network of weights equal to 1 may be indicated by the following metadata.

**nnpfc_structure_split_proportion_of_ones_idc[ i ]** indicates the number of weights equal to 1 in the part of index i of the neural network, expressed as a percentage of its parameters. nnpfc_structure_split_proportion_of_ones_idc[ i ] equal to 0 indicates that the the number of weights equal to 1 in the part of index i of the neural network is unknown. *When nnpfc_base_flag equals to 0, nnpfc_structure_split_proportion_of_ones_idc[ i ] indicates information related to the number of weights equal to 1 in the update of part of index i.* This value is in the range 0 and 100 and coded over 7 bits. As an alternative it may be coded according to the following table (in this case the nnpfc_structure_split_proportion_of_ones_idc[ i ] is coded over 2 bits):

| **nnpfc_structure_split_proportion_of_ones_idc[ i** ] | **Interpretation** |
|---|---|
| 0 | The proportion of weights equal to 1 is in [0%, 5%) |
| 1 | The proportion of weights equal to 1 is in [5%, 10%) |
| 2 | The proportion of weights equal to 1 is in [10%, 20%) |
| 3 | The proportion of weights equal to 1 is above 20% |

**nnpfc_structure_split_max_layer_size[ i ]** indicates the maximum layer size in the part of index i of the neural network. *When nnpfc_base_flag equals to 0, nnpfc_structure_split_max_layer_size[ i ] indicates information related to the maximaum layer size in the update of part of index i.*

Alternatively, the following metadata may be used:
**nnpfc_structure_split_max_layer_size_idc[ i ]** indicates the maximum layer size in the part of index i of the neural network. *When nnpfc_base_flag equals to 0, nnpfc_structure_split_max_layer_size[ i ] indicates information related to the maximaum layer size in the update of part of index i.* It is coded according to the following table:

| **nnpfc_structure_split_max_layer_size_idc[ i** ] | **Interpretation** |
|---|---|
| 0 | The maximum layer size is lower than or equal to 32 |
| 1 | The maximum layer size is in [32, 64) |
| 2 | The maximum layer size is in [64, 128) |
| 3 | The maximum layer size is in [128, 256) |
| 4 | The maximum layer size is in [256, 512) |
| 5 | The maximum layer size is higher than or equal to 512 |
| 6-7 | Reserved for future use |

**nnpfc_structure_split_receptive_field_width[ i** ] indicates the (e.g., minimal, average, maximal) width of all receptive fields considering all layers in the part of index i of the NNPF. For example, for a receptive field of size 15x15, nnpfc_structure_split_receptive_field_width[ i ] is equal to 15. *When nnpfc_base_flag equals to 0, nnpfc_structure_split_receptive_field_width[ i ] indicates information related to the width of all receptive fields considering all layers in the update of part of index i.*

**nnpfc_structure_split_receptive_field_height[ i ]** indicates the (e.g., minimal, average, maximal) height of all receptive fields considering all layers in the part of index i of the NNPF. For example, for a receptive field of size 15x15, nnpfc_structure_split_receptive_field_height[ **i** ] is equal to 15. *When nnpfc_base_flag equals to 0, nnpfc_structure_split_receptive_field_height[ i ] indicates information related to the height of all receptive fields considering all layers in update of part of index i.*

Alternatively, the receptive field may be described by its full size:
**nnpfc_structure_split_receptive_field_size[ i ]** indicates the (e.g., minimal, average, maximal) size of all receptive fields considering all layers in the part of index i of the NNPF. For example, for a receptive field of size 15x15, nnpfc_structure_split_receptive_field_size[ **i** ] is equal to 225. *When nnpfc_base_flag equals to 0, nnpfc_structure_split_receptive_field_size[ i ] indicates information related to the size of all receptive fields considering all layers in the update of part of index i.*

Alternatively, the following definition may apply:
**nnpfc_structure_split_receptive_field_size_idc[ i** ] indicates the (e.g., minimal, average, maximal) size of all receptive fields considering all layers in the part of index i of the NNPF and it is coded according to the following table. *When nnpfc_base_flag equals to 0, nnpfc_structure_split_receptive_field_size_idc[ i ] indicates information related to the size of all receptive fields considering all layers in the update of part of index i.*

| **nnpfc_structure_split_receptive_field_size_idc[ i ]** | **Interpretation** |
|---|---|
| 0 | The size of the receptive field is 3x3 |
| 1 | The size of the receptive field is 4x4 |
| 2 | The size of the receptive field is 5x5 |
| 3 | The size of the receptive field 9x9 |
| 4 | The size of the receptive field is 16x16 |
| 5 | The size of the receptive field is 25x25 |
| 6-7 | Reserved for future use |

**nnpfc_structure_split_data_type_compatibility_flags[ i ]** corresponds to a bit field mask that indicates the different compatible data types that may be used, among, for example, FP4 (for floating point precision data representation of 4 bits) , FP6, FP8, INT8 (for integer data representation of 8 bits), FP16, BF16 (or BFLOAT16 (for brain floating point of 16 bits)), TF32 (for tensor float of 32 bits), FP32, FP64, FP80. These data types describe different floating point formats and data representations. The values of nnpfc_structure_split_data_type_compatibility_flags[ i ] is described in the below table. *When nnpfc_base_flag equals to 0, nnpfc_structure_split_data_type_compatibility_flags[ i ] indicates information related to the different compatible data types that may be used in the update of part of index i.*
bit 0: indicates that the part of index i of the NN's architecture and its use is compatible with the data type of type FP4.
bit 1: indicates that the part of index i of the NN's architecture and its use is compatible with the data type of type FP6.
bit 2: indicates that the part of index i of the NN's architecture and its use is compatible with the data type of type INT8.
bit 3: indicates that the part of index i of the NN's architecture and its use is compatible with the data type of type FP8.
bit 4: indicates that the part of index i of the NN's architecture and its use is compatible with the data type of type FP16.
bit 5: indicates that the part of index i of the NN's architecture and its use is compatible with the data type of type BF16 (BFLOAT16).
bit 6: indicates that the part of index i of the NN's architecture and its use is compatible with the data type of type TF32.
bit 7: indicates that the part of index i of the NN's architecture and its use is compatible with the data type of type FP32.
bit 8: indicates that the part of index i of the NN's architecture and its use is compatible with the data type of type FP64.
bit 9: indicates that the part of index i of the part of index i of the NN's architecture and its use is compatible with the data type of type FP80.
bits 10-12: bit reserved for future use.

**Table 1 - description of nnpfc_structure_split_data_type_compatibility_flags[i]**

| **Bit number** | **Data type** |
|---|---|
| 0 | FP4 |
| 1 | FP6 |
| 2 | INT8 |
| 3 | FP8 |
| 4 | FP16 |
| 5 | BF16 |
| 6 | TF32 |
| 7 | FP32 |
| 8 | FP64 |
| 9 | FP80 |
| 10-12 | Reserved for future use |

In another alternative embodiment or in complement to the above metadata, another metadata indicating the minimum data type compatible with the part of index i in the neural network's architecture and its use can be provided.

**nnpfc_structure_split_minimum_data_type_idc[ i** ] indicates the minimum compatible data type that may be used, among, for example, FP4, FP6, FP8, INT8, FP16, BF16 (or BFLOAT16), TF32, FP32, FP64, FP80. These data types describe different floating point formats and data representations. The values of nnpfc_structure_split_minimum_data_type_idc[ **i** ] is described in the below table. *When nnpfc_base_flag equals to 0,* nnpfc_structure_split_minimum_data_type_idc[ **i** ] *indicates information related to the update of part of index i.*

**Table 2 - description of nnpfc_structure_split_minimum_data_type_idc**

| **Bit number** | **Data type** |
|---|---|
| 0 | FP4 |
| 1 | FP6 |
| 2 | INT8 |
| 3 | FP8 |
| 4 | FP16 |
| 5 | BF16 |
| 6 | TF32 |
| 7 | FP32 |
| 8 | FP64 |
| 9 | FP80 |
| 10-15 | Reserved for future use |

**nnpfc_structure_split_simplified_architecture_present_flag[ i ]** indicates whether a simplified architecture of the part of index i of the neural network is present or not. nnpfc_structure_split_simplified_architecture_present_flag[ i ] equal to 1 indicates that a simplified architecture of the part of index i of the neural network is present. nnpfc_structure_split_simplified_architecture_present_flag[ i ] equal to 0 indicates that a simplified architecture of the part of index i of the neural network is not present. This metadata may be optional. *When nnpfc_base_flag equals to 0, nnpfc_structure_split_simplified_architecture_present_flag[ i ] indicates information related to the presence of a simplified architecture of the update of part of index i.*

**nnpfc_structure_split_num_layer_types[ i** ] indicates the number of different layer types present in the part of index i of the NNPF architecture, where a layer type is defined by its size, its kernel dimensions and its spatial invariance. *When nnpfc_base_flag equals to 0, nnpfc_structure_split_num*_*layer_types[ i ] indicates information related to the number of different layer types in the update of part of index i.*

**nnpfc_structure_split_layer_kernel_width[ i ]** [ **j ]** indicates the width of the kernel used in layer type of index j in the part of index i. *When nnpfc_base_flag equals to 0, nnpfc_structure_split_layer_kernel_width[ i ][ j ] indicates information related to the width of the kernel used in layer type of index j in the update of part of index i.*

**nnpfc_structure_split_structure_split_layer_kernel_height[ i ]** [ **j** ] indicates the height of the kernel used in layer type of index j in the part of index i. *When nnpfc_base_flag equals to 0, nnpfc_structure_split_layer_kernel_height[ i ][ j ] indicates information related to the height of the kernel used in layer type of index j in the update of part of index i.*

**nnpfc_structure_split_layer_size[ i ]** [ **j** ] indicates the size of the layer type of index j in the part of index i. *When nnpfc_base_flag_equals to 0, nnpfc_structuresplit layer size[ i ][ j ] indicates information related to the size of the layer type of index j in the update of part of index i.*

**nnpfc_structure_split_layer_spatial_invariance_x[ i ] [ j ]** indicates the spatial invariance of the layer type of index j, in the first dimension corresponding to the kernel width for the part of index i. It is coded over 1 bit. nnpfc_structure_split_layer_spatial_invariance_x[ i ] [ j ] equal to 0 indicates no spatial invariance on the first dimension. nnpfc_structure_split_layer_spatial_invariance_x[ i ][ j ] equal to 1 indicates spatial invariance on the first dimension. *When nnpfc_base_flag equals to 0, nnpfc_structure_split_spatial_invariance_x[i ][ j ] indicates information related to the spatial invariance of the layer type of index j in the first dimension corresponding to the kernel width in the update of part of index i.*

**nnpfc_structure_split_layer_spatial_invariance_y[ i ] [ j ]** indicates the spatial invariance of the layer type of index j, in the second dimension corresponding to the kernel height for the part of index i. nnpfc_structure_split_layer_spatial_invariance_y[ i ] [ j ] equal to 0 indicates no spatial invariance on the second dimension. nnpfc_structure_split_layer_spatial_invariance_y[ i ] [ j ] equal to 1 indicates spatial invariance on the second dimension. *When nnpfc_base_flag equals to 0, nnpfc_structure_split_spatial_invariance_x[ i ][ j ] indicates information related to the spatial invariance of the layer type of index j in the second dimension corresponding to the kernel height in the update of part of index i.*

**nnpfc_structure_split_layer_spatial_invariance_z[ i ] [ j ]** indicates the spatial invariance of the layer type of index j, in the third dimension corresponding to the layer size for the part of index i. nnpfc_structure_split_layer_spatial_invariance_z[ i ] [ j ] equal to 0 indicates no spatial invariance on the third dimension. nnpfc_structure_split_layer_spatial_invariance_z[ i ] [ j ] equal to 1 indicates spatial invariance on the third dimension. *When nnpfc_base_flag equals to 0, nnpfc_structure_split_spatial_invariance_x[ i ][ j ] indicates information related to the spatial invariance of the layer type of index j in the third dimension corresponding to the kernel size in the update of part of index i.*

**nnpfc_structure_split_num_layers[ i ]** [ **j ]** indicates the number of layers in the part of index i in the NNPF that correspond to layer type of index j. *When nnpfc_base_flag equals to 0, nnpfc_structure_split_num*_*layers[ i ][ j ] indicates information related to the number of layers in the update of part of index i that correspond to layer type of index j.*

In another embodiment, other metadata describing by other means a simplified architecture of a neural network may be used.

In another embodiment, additional metadata may complement the above simplified architecture, for example, the sparsity per type of layer or for all layers of a given layer type, the number of ones per type of layer or for all layers of a given layer type.

**nnpfc_structure_split_energy_info_present_flag[ i ]** specifies whether some information related to the energy consumption of the part of index i of the neural network or related to the energy consumption subsequently to the use of the part of index i of the neural network is present. nnpfc_structure_split_energy_info_present_flag[ i ] equal to 1 specifies that some information related to the energy consumption of the part of index i of the neural network or related to the energy consumption subsequently to the use of the part of index i of the neural network is present. nnpfc_structure_split_energy_info_present_flag[ i ] equal to 0 specifies that some information related to the energy consumption of the part of index i of the neural network or related to the energy consumption subsequently to the use of the part of index i of the neural network is not present. *When nnpfc_base_flag equals to 0, nnpfc_structure_split_energy_info_present_flag[ i ] indicates whether some information related to the energy consumption of the update of the part of index i is present.*

**nnpfc_structure_split_energy_ratio[ i ]** specifies the sum in terms of energy, considering both the energy consumed while applying the NNPF filter and the energy needed while using the content consequently to the application of the NNPF induced by the part of index i. *When nnpfc_base_flag_equals to 0, nnpfc_structure_split energy ratio[ i ] specifies the sum in terms of energy induced by the update of part of index i.*

In all the above embodiment, the energy can be expressed as an absolute value, a percentage, some predefined levels, etc.

**nnpfc_structure_split_energy_ratio_sgn_flag[ i ]** specifies if the value of nnpfc_structure_split_energy_ratio[ i ] should be considered as negative or positive. If nnpfc_structure_split_energy_ratio_sgn_flag[ i ] equals 0, the use of the NNPF results in a gain in terms of energy. If nnpfc_structure_split_energy_ratio_sgn_flag[ i ] equals 1, the use of the NNPF results in a loss in terms of energy.

### Syntax elements correspond to delta (i.e., difference) per part of the updated NNPF structure

The semantics of the proposed syntax elements as deltas per part of the NNPF structure are below. Similar semantics can be derived when the NNPF's structure is to be defined with only two parts (backbone and tail).

Optionally, the semantics of nnpfc_structure_split_complexity_info_present_flag[ i ] may be modified as follows.

**nnpfc_structure_split_complexity_info_present_flag[ i ]** specifies whether some information related to the complexity of the neural network is present. *When nnpfc_base_flag equals to 0, nnpfc_structure_split_complexity_info_present_flag*[ i ] *specifies whether some information related to the deltas in terms of complexity of the updated part of index i of the structure of the neural network, compared to the complexity before the update of the part of index i, is present.* nnpfc_structure_split_complexity _info_present_flag[ i ] equal to 1 specifies that some information related to the deltas in terms of complexity of the neural network is present. nnpfc_structure_split_complexity _info_present_flag[ i ] equal to 0 specifies that no information related to the deltas in terms of complexity of the neural network is present.

Similarly, optionally the semantics of nnpfc_structure_energy_info_present_flag[ i ] may be modified to indicate that deltas compared to the original values of part of index i are signalled in the energy related syntax elements.

In the case where deltas per part of the NNPF are signalled, only the syntax elements below are signalled. Alternatively, if the semantics of nnpfc_structure_split_complexity_info_present_flag[ i ] and nnpfc_structure_energy_info_present__flag[ i ] is unchanged, all syntax elements corresponding to parts of the NNPF structure are signalled, whether they correspond to delta values or not.

**nnpfc_structure_split_num_parameters_idc[ i ]** indicates the maximum number of the neural network's parameters for the part of index i of the NNPF in units of a power of 2 048. nnpfc_structure_split_num_parameters_idc[ i ] equal to 0 indicates that the maximum number of neural network parameters is unknown for the part of index i. The value nnpfc_structure_split_num_parameters_idc[ i ] shall be in the range of 0 to 52, inclusive. *When nnpfc_base_flag equals to 0, nnpfc_structuresplit num parameters idc[ i ] indicates the delta (difference) in terms of maximum number of parameters between the updated and original parts of index i of the NNPF. In this case an additional syntax element is defined as below:*
***nnpfc_structure_split_num_parameters_sign_flag[ i ]** indicates, when nnpfc_base_flag equals to 0, whether the value of nnpfc_structure_split_num_parameters_idc[ i ] is understood as a positive (when nnpfc_structure_split_num_parameters_sign_flag[ i ] equals to 0) or negative (when nnpfc_structure_split_num_parameters_sign_flag[ i ] equals to 1) value.*

If the value of nnpfc_structure_split_num_parameters_idc[ i ] is greater than zero, the variable maxNumParameters[ i ] is derived as follows: $maxNumParameters \left[i\right] = \left(2 048≪nnpfc_structure_split_num_parameters_idc\left[i\right]\right) - 1$

**nnpfc_structure_split_num_kmac_operations_idc[ i ]** greater than 0 indicates that the maximum number of multiply-accumulate operations per sample of the part of index i of the NNPF is less than or equal to nnpfc_structure_split_num_kmac_operations_idc[ i ] * 1 000. nnpfc_structure_split_num_kmac_operations_idc[ i ] equal to 0 indicates that the maximum number of multiply-accumulate operations of the part of index i of the network is unknown. The value of nnpfc_structure_split_num_kmac_operations_idc[ i ] shall be in the range of 0 to 2³² - 2, inclusive. *When nnpfc_base_flag equals to 0, nnpfc_structure_split_num_kmac_operations_idc [ i ] indicates the delta (difference) in terms of maximum number of multiply-accumulate operations per sample between the updated and original parts of index i of the structure of the NNPF. In this case an additional syntax element is defined as below:*
***nnpfc_structure_split_num_kmac_operations_sign_flag[i] i**ndicates, when nnpfc_base _flag equals to 0, whether the value of nnpfc_structure_split_num_kmac_operations_idc[ i ] is to be understood as a positive (when nnpfc_structure_split_num_kmacs_operations_sign_flag[ i ] equals to 0) or negative (when nnpfc_structure_split_num_kmacs_operations_sign_flag[ i ] equals to 1) value.*

Similar variants of the semantics of the following syntax elements may be derived, related to the delta (difference) values between the updated and the original parts of index i of the structure of the NNPF: nnpfc_structure_split_total_kilobyte_size[ i ], nnpfc_structure_split_non_null _weights[ i ], nnpfc_structure_split_sparsity_idc[ i ], nnpfc_structure_split_weights_equal_one[ i ], nnpfc_structure_split_proportion_of_ones_idc[ i ], nnpfc_structure_split_max_layer_size[ i ], nnpfc_structure_split_receptive_field_width[ i ], nnpfc_structure_split_receptive_field_height[ i ], nnpfc_structure_split_receptive_field_size[ i ], nnpfc_structure_split_energy_ratio[ i ]. Corresponding syntax elements indicating the sign of the above syntax elements' deltas values may be specified.

### Syntax elements correspond to deltas for the whole NNPF structure

The semantics of the proposed syntax elements as deltas for the whole NNPF structure are below.

Optionally, the semantics of nnpfc_structure_split_complexity_info_present_flag may be modified as follows.

**nnpfc_structure_split_complexity_info_present_flag** specifies whether some information related to the complexity of the neural network is present. *When nnpfc_base_flag equals to 0, nnpfc_structure_split_complexity_info_present_flag specifies whether some information related to the deltas in terms of complexity of the updated structure of the neural network, compared to the complexity before the structure's update, is present.* nnpfc_structure_split_complexity_info_present_flag equal to 1 specifies that some information related to the complexity of the neural network is present. nnpfc_structure_split_complexity_info_present_flag equal to 0 specifies that no information related to the complexity of the neural network is present.

Similarly, optionally the semantics of nnpfc_structure_energy_info_present_flag may be modified to indicate that deltas compared to the original values are signalled in the energy related syntax elements.

In this case, only the syntax elements below are signalled. Alternatively, if the semantics of nnpfc_structure_split_complexity_info_present_flag and nnpfc_structure_energy_info_present_flag is unchanged, all syntax elements corresponding to parts of the NNPF structure are signalled, whether they correspond to delta values or not.

**nnpfc_structure_split_num_parameters_idc** indicates the maximum number of neural network's parameters of the NNPF in units of a power of 2048. nnpfc_structure_split_num_parameters_ide equal to 0 indicates that the maximum number of neural network parameters is unknown. The value nnpfc_structure_split_num_parameters_ide shall be in the range of 0 to 52, inclusive. *When nnpfc_base_flag equals to 0, nnpfc_structure_split_num_parameters_idc indicates the delta (e.g., difference) in terms of maximum number of parameters between the updated and original structures of the NNPF. In this case an additional syntax element is defined as below:*

***nnpfc_structure_split_num_parameters_sign_flag** indicates, when nnpfc_base_flag equals to 0, whether the value of nnpfc_structure_split_num_parameters_idc is to be understood as a positive (when nnpfc_structure_split_num_parameters_sign_flag equals to 0) or negative (when nnpfc_structure_splitnum_parameters_sign_flag equals to 1) value.*

**nnpfc_structure_split_num_kmac_operations_idc** greater than 0 indicates that the maximum number of multiply-accumulate operations per sample of the NNPF is less than or equal to nnpfc_structure_split_num_kmac_operations_idc * 1 000. nnpfc_structure_split_num_kmac_operations_idc equal to 0 indicates that the maximum number of multiply-accumulate operations of the network is unknown. *When nnpfc_base_flag equals to 0, nnpfc_structure_split_num_kmac_operations_idc indicates the delta (difference) in terms of maximum number of multiply-accumulate operations per sample between the updated and original structures of the NNPF. In this case an additional syntax element is defined as below:*

***nnpfc**_**structure_split_num_kmac_operations_sign_flag** indicates, when nnpfc_base_flag equals to 0, whether the value of nnpfc_structure_split_num_kmac_operations_idc is to be understood as a positive (when nnpfc_structure_split_num_kmacs_operations_sign_flag equals to 0) or negative (when nnpfc_structure_split_num_kmacs_operations_sign_flag equals to 1) value.*

Similar variants of the semantics of the following syntax elements may be derived, related to the delta or difference values between the updated and the original structures of the NNPF: nnpfc_structure_split_total_kilobyt_size, nnpfc_structure_split_non_null_weights, nnpfc_structure_split_sparsity_idc, nnpfc_structure_split_weights_equal_one, nnpfc_structure_split_proportion_of_ones_idc, nnpfc_structure_split_max_layer_size, nnpfc_structure_split_receptive_field_width, nnpfc _structure_split_receptive_field_height, nnpfc_structure_split_receptive_field_size, nnpfc _structure_split_energy_ratio. Corresponding syntax elements indicating the sign of the above syntax elements' deltas values may be specified.

### Semantics for the NNPFA SEI message

### Syntax elements correspond to updated parts of the NNPF structure

The semantics of the proposed syntax elements per part of the NNPF structure, as signalled in the NNPFA SEI message, are similar to the semantics of the syntax elements corresponding to parts of the NNPF structure, where a syntax element with prefix nnpfc_ corresponds to a syntax element with prefix nnpfa_ and where the wording 'part of index i' is replaced by 'updated part of index i'. Similar semantics can be derived when the NNPF's structure is to be defined with only two parts (backbone and tail).

### Syntax elements correspond to deltas per part of the NNPF structure

The semantics of the proposed syntax elements as deltas per part of the NNPF structure, as signalled in the NNPFA SEI message, are described below. Similar semantics can be derived when the NNPF's structure is to be defined with only two parts (backbone and tail).

Optionally, the semantics of nnpfa_structure_split_complexity_info_present_flag[ i ] may be modified as follows.

**nnpfa_structure_split_delta_complexity_info_present_flag[ i ]** specifies whether some information related to *deltas in terms of complexity of the updated part of index i of the structure of the neural network, compared to the complexity before the update of the part of index i, is present.* nnpfa_structure_delta_split_complexity_info_present_flag[ i ] equal to 1 specifies that some information related to the complexity of the part of index i of the neural network is present. nnpfa_structure_delta_split_complexity _info_present_flag[ i ] equal to 0 specifies that no information related to the complexity of the part of index i of the neural network is present.

Similarly, optionally the semantics of nnpfa_structure_split_delta_energy_info_present_flag[ i ] may be modified to indicate that deltas compared to the original values of part of index i are signalled in the energy related syntax elements.

In this case, only the syntax elements below are signalled. Alternatively, if the semantics of nnpfa_structure_split_complexity_info_present_flag[ i ] and nnpfa_structure_energy_info_present_flag[ i ] is unchanged, all syntax elements corresponding to updated parts of the NNPF structure are signalled, whether they correspond to delta values or not.

**nnpfa_structure_split_delta_num_parameters_idc[ i ]** indicates *delta (difference) in terms of maximum number of parameters between the updated and original parts of index i of the NNPF* in units of a power of 2 048. nnpfa_structure_split_delta_num_parameters_idc[ i ] equal to 0 indicates that the delta of maximum number of neural network parameters is unknown for the part of index i.

***nnpfa_structure_split_delta_num_parameters_sign_flag[ i ]** indicates whether the value of nnpfa_structure_split_delta_num_parameters_idc[ i ] is to be understood as a positive (when nnpfa_structure_split_delta_num_parameters_sign_flag[ i ] equals to 0) or negative (when nnpfa_structure_split_delta_num_parameters_sign_flag[ i ] equals to 1) value.*

If the value of nnpfa_structure_split_delta _num_parameters_idc[ i ] is greater than zero, the variable maxNumParameters[ i ] is derived as follows: $\begin{matrix}maxNumParameters \left[i\right] = \\ \left(2 048≪nnpfa_structure_split_delta_num_parameters_idc\left[i\right]\right) - 1\end{matrix}$

**nnpfa_structure_split_delta_num_kmac_operations_idc[ i** ] greater than 0 indicates *the delta (difference) in terms of maximum number of multiply-accumulate operations per sample between the updated and original parts of index i of the structure of the NNPF.* nnpfa_structure_split_delta_num_kmac_operations_idc[ i ] equal to 0 indicates that the delta *in terms of maximum number of multiply-accumulate operations per sample between the updated and original parts of index i of the structure of the NNPF* is unknown.

***nnpfa_structure_split_delta_num_kmac_operations_sign_flag[ i ]** indicates whether the value of nnpfa_structure_split_delta_num_kmac_operations_idc[ i ] is to be understood as a positive (when nnpfa_structure_split_delta_num_kmacs_operations_sign_flag[ i ] equals to 0) or negative (when nnpfa_structure_split_delta_num_kmacs_operations_sign_flag[ i ] equals to 1) value.*

Similar variants of the semantics of the following syntax elements may be derived, related to the delta or difference values between the updated and the original parts of index i of the structure of the NNPF: nnpfa_structure_split_delta_total_kilobyte_size[ i ], nnpfa_structure_split_delta_non_null_weights[ i ], nnpfa_structure_split_delta_sparsity_idc[ i ], nnpfa_structure_split_delta_weights_equal_one[ i ], nnpfa_structure_split_delta_proportion_of_ones_idc[ i ], nnpfa_structure_split_delta_max_layer_size[ i ], nnpfa_structure*_*split_delta_receptive_field_width[ i ], nnpfa_structure*_*split_delta_receptive_field_height[ i ], nnpfa_structure*_*split_delta_receptive_field_size[ i ], nnpfa_structure*_*split_delta_energy_ratio[ i ]. Corresponding syntax elements indicating the sign of the above syntax elements' deltas values may be specified.

### Syntax elements correspond to the updated whole NNPF structure

The semantics of the proposed syntax elements corresponding to an update of the whole NNPF structure in the NNPFA SEI message can be derived from the syntax elements corresponding to parts of the NNPF structure while replacing the prefix "nnpfc_" with the prefix "nnpfa" and replacing the wording 'part of index i of the structure of the NNPF' with 'updated whole structure of the NNPF' .

### Syntax elements correspond to delta of the whole NNPF structure

The semantics of the proposed syntax elements as deltas for the whole NNPF structure, as signalled in the NNPFA SEI message, can be derived from the syntax elements for deltas per part of the NNPF structure, while replacing the wording 'part of index i of the NNPF structure' with 'the whole NNPF structure'.

### Emb.1 - Information related to complexity and energy information per part is signalled in the NNPFC SEI message

In this embodiment, the NNPF structure may be signalled in several parts in the NNPFC SEI message, for example, when the syntax element nnpfc_base_flag is equal to 1. For each part of the NNPF structure, individual information related to the complexity or the energy information related to running the NNPF or as a consequence of running the NNPF is signalled in the NNPFC SEI message.

In a first example, the NNPF structure is split into two parts, named backbone and tail. The syntax with the added syntax elements related to the energy and complexity is modified as follows (changes highlighted in italic). The full syntax for the NNPFC SEI message before modification can be found in an article by J. Boyce et al., entitled "Additional SEI messages for VSEI version 4 (Draft 6)," document JVET-AL2006, 38th JVET Meeting, 2025.

| | |
|---|---|
| nn_post_filter_characteristics( payloadSize ) { | **Descriptor** |
| **nnpfc_purpose** | u(16) |
| **nnpfc_id** | ue(v) |
| **nnpfc_base_flag** | u(1) |
| **nnpfc_mode_idc** | ue(v) |
| if( nnpfc_mode_idc = = 1) { | |
| while( !byte_aligned( ) ) | |
| **nnpfc_alignment_zero_bit_a** | f(1) |
| **nnpfc_tag_uri** | st(v) |
| **nnpfc_uri** | st(v) |
| } | |
| **nnpfc_property_present_flag** | u(1) |
| if( nnpfc_property_present_flag ) { | |
| ... | |
| **nnpfc_complexity_info_present_flag** | u(1) |
| if( nnpfc_complexity_info_present_flag ) { | |
| **nnpfc_parameter_type_idc** | u(2) |
| if( nnpfc_parameter_type_idc != 2 ) | |
| **nnpfc_log2_parameter_bit_length_minus3** | u(2) |
| **nnpfc_num_parameters_ide** | u(6) |
| **nnpfc_num_kmac_operations_idc** | ue(v) |
| **nnpfc_total_kilobyte_size** | ue(v) |
| } | |
| **nnpfc_num_metadata_extension_bits** | ue(v) |
| if( nnpfc_num_metadata_extension_bits > 0 ) { | |
| if( nnpfc_purpose = = 0 ) { | |
| **nnpfc_application_purpose_tag_uri_present_flag** | u(1) |
| if( nnpfc_application_purpose_tag_uri_present_flag ) { | |
| while( !byte_aligned( ) ) | |
| **nnpfc_metadata_alignment_zero_bit** | f(1) |
| **nnpfc_application_purpose_tag_uri** | st(v) |
| } | |
| } | |
| if( SpatialExtrapolationFlag \| \| ResolutionResamplingFlag ) | |
| **nnpfc_scan_type_idc** | u(2) |
| **nnpfc_for_human_viewing_idc** | u(2) |
| **nnpfc_for_machine_analysis_idc** | u(2) |
| if( nnpfc_base_flag = = 1 && nnpfc_mode_idc = = 1) { | |
| **nnpfc_backbone_info_flag** | u(1) |
| if( nnpfc_backbone_info_flag ) { | |
| while( !byte_aligned( ) ) | |
| **nnpfc_metadata_alignment_b_zero_bit** | f(1) |
| **nnpfc_backbone_uri** | st(v) |
| **nnpfc_tail_uri** | st(v) |
| ***nnpfc_backbone_complexity_info_present_flag*** | *u(1)* |
| *if( nnpfc_backbone_complexity_info_present_flag ) {* | |
| ***nnpfc_backbone_parameter_type_idc*** | *u(2)* |
| *if( nnpfc_backbone_parameter_type_idc != 2)* | |
| ***nnpfc_backbone_log2_parameter_bit_length_minus3*** | *u(2)* |
| ***nnpfc_backbone_num_parameters_idc*** | *u(6)* |
| ***nnpfc_backbone_num_kmac_operations_idc*** | *ue(v)* |
| ***nnpfc_backbone_total_kilobyte_size*** | *ue(v)* |
| *}* | |
| ***nnpfc_tail_complexity_info_present_flag*** | u(1) |
| *if( nnpfc_tail_complexity*_*info_present_flag ) {* | |
| ***nnpfc_tail_parameter_type_idc*** | *u(2)* |
| *if( nnpfc_tail_parameter_type_idc != 2)* | |
| ***nnpfc_tail_log2_parameter_bit_length_minus3*** | *u(2)* |
| ***nnpfc_tail_num_parameters_idc*** | *u(6)* |
| ***nnpfc_tail_num_kmac_operations_idc*** | *ue(v)* |
| ***nnpfc_tail_total_kilobyte_size*** | *ue(v)* |
| *}* | |
| ***nnpfc_backbone_energy_info_present_flag*** | *u(1)* |
| *if( nnpfc_backbone_energy_info_present_flag ) {* | |
| ***nnpfc_backbone_energy_ratio_sgn_flag*** | *u(1)* |
| ***nnpfc_backbone_energy_ratio*** | *u(8)* |
| ***}*** | |
| ***nnpfc_tail_energy_info_present_flag*** | *u(1)* |
| *if( nnpfc_tail_energy_info_present_flag ) {* | |
| ***nnpfc_tail_energy_ratio_sgn_flag*** | *u(1)* |
| ***nnpfc_tail_energy_ratio*** | *u(8)* |
| *}* | |
| } | |
| } | |
| **nnpfc_reserved_metadata_extension** | u(v) |
| } | |
| } | |
| /* ISO/IEC 15938-17 bitstream */ | |
| if( nnpfc_mode_idc = = 0) { | |
| while( !byte_aligned( ) ) | |
| **nnpfc_alignment_zero_bit_b** | f(1) |
| for( i = 0; more_data_in_payload( ); i++ ) | |
| **nnpfc_payload_byte**[ i ] | b(8) |
| } | |
| } | |

In a variant, the NNPF architecture is split into more than two parts (backbone and tail), and the individual complexity and energy information is sent for each of these parts. The syntax is then modified as follows (changes highlighted in italic):

| | |
|---|---|
| **...** | |
| **nnpfc_for_human_viewing_idc** | u(2) |
| **nnpfc_for_machine_analysis_idc** | u(2) |
| if( nnpfc_base_flag = = 1 && nnpfc_mode_idc = = 1) { | |
| **nnpfc_structure_split_info_flag** | u(1) |
| if( nnpfc_structure_split_info_flag ) { | |
| **nnpfc_structure_split_part_nb_minus1** | u(16) |
| for( i = 0; i < nnpfc_structure_split_part_nb_minus1 + 1; i++ ){ | |
| **nnpfc_structure_split_part_id[ i ]** | |
| while( !byte_aligned( ) ) | |
| **nnpfc_metadata_alignment_b_zero_bit** | f(1) |
| **nnpfc_structure_split_part_uri[ i ]** | st(v) |
| ***nnpfc_structure_split_complexity_info_present_flag[ i ]*** | *u(1)* |
| *if( nnpfc_structure_split_complexity_info_present_flag[ i ] ) {* | |
| ***nnpfc_structure_split_parameter_type_idc[ i ]*** | *u(2)* |
| *if( nnpfc_structure_split_parameter_type_idc[ i ] != 2 )* | |
| ***nnpfc_structure_split_log2_parameter_bit_length_minus3[ i ]*** | *u(2)* |
| ***nnpfc_structure_split_num_parameters_idc[ i ]*** | *u(6)* |
| ***nnpfc_structure_split_num_kmac_operations_idc[ i ]*** | *ue(v)* |
| ***nnpfc_structure_split_total_kilobyte_size[ i ]*** | *ue(v)* |
| *}* | |
| ***nnpfc_structure_split_energy_info_present_flag[ i ]*** | *u(1)* |
| *if( nnpfc_structure_split_energy_info_present_flag[ i ] ) {* | |
| ***nnpfc_structure_split_energy_ratio_sgn_flag[ i ]*** | *u(1)* |
| ***nnpfc_structure_split_energy_ratio[ i ]*** | *u(8)* |
| *}* | |
| } | |
| } | |
| } | |
| **nnpfc_reserved_metadata_extension** | u(v) |
| } | |
| } | |

In a variant, other syntax elements specifying the complexity of the NNPF may be added as shown below (changes highlighted in italic). This addition of the below syntax elements may be applied to all variants in this document.

| | |
|---|---|
| ... | |
| **nnpfc_for_human_viewing_idc** | u(2) |
| **nnpfc_for_machine_analysis_idc** | u(2) |
| if( nnpfc_base_flag = = 1 && nnpfc_mode_idc = = 1) { | |
| **nnpfc_structure_split_info_flag** | u(1) |
| if( nnpfc_structure_split_info_flag ) { | |
| **nnpfc_structure_split_part_nb_minus1** | u(16) |
| for( i = 0; i < nnpfc_structure_split_part_nb_minus1 + 1; i++ ){ | |
| **nnpfc_structure_split_part_id[ i ]** | |
| while( !byte_aligned( ) ) | |
| **nnpfc_metadata_alignment_b_zero_bit** | f(1) |
| **nnpfc_structure_split_part_uri[ i ]** | st(v) |
| ***nnpfc_structure_split_complexity_info_present_flag[ i ]*** | *u(1)* |
| *if( nnpfc_structure_split_complexity_info_present_flag[ i ] ) {* | |
| ***nnpfc_structure_split_parameter_type_idc[ i ]*** | *u(2)* |
| *if( nnpfc_structure_split_parameter*_*type_idc[ i ] != 2 )* | |
| ***nnpfc_structure_split_log2_parameter_bit_length_minus3[ i ]*** | *u(2)* |
| ***nnpfc_structure_split_num_parameters_idc[ i ]*** | *u(6)* |
| ***nnpfc_structure_split_num_kmac_operations_idc[ i ]*** | *ue(v)* |
| ***nnpfc_structure_split_total_kilobyte_size[ i ]*** | *ue(v)* |
| ***nnpfc_structure_split_non_null_weight[ i ]*** | *u(6)* |
| ***nnpfc_structure_split_sparsity_idc[ i ]*** | *u(7)* |
| ***nnpfc_structure_split_weights_equal_one[ i ]*** | *u(6)* |
| ***nnpfc_structure_split_proportion_of_ones_idc[ i ]*** | *u(7)* |
| ***nnpfc_structure_split_max_layer_size_idc[ i ]*** | *u(8)* |
| ***nnpfc_structure_split_receptive_field_width[ i ]*** | *u(8)* |
| ***nnpfc_structure_split_receptive_field[ i ]*** | *u(8)* |
| ***nnpfc_structure_split_data_type_compatibility_flags[ i ]*** | *u(12)* |
| ***nnpfc_structure_split_minimum_data_type_idc[ i ]*** | *u(4)* |
| ***nnpfc_structure_split_simplified_architecture_present_flag[ i ]*** | *u(1)* |
| *if( nnpfc_structure_split_simplified_architecture_present_flag[ i ] ){* | |
| ***nnpfc_structure_split_num_layer_types[ i ]*** | *u(16)* |
| *for(j = 0; j* < *= nnpfc_structure_split_num*_*layer_types[ i ] ; j++ ){* | |
| ***nnpfc_structure_split_layer_kernel_width**[ i ] [ j ]* | *u(8)* |
| ***nnpf_structure_split_layer_kernel_height**[ i ] [ j ]* | *u(8)* |
| ***nnpfc_structure_split_layer_size**[ i ] [ j ]* | *u(8)* |
| ***nnpfc_structure_split_layer_spatial_invariance_x**[ i ] [ j ]* | *u(1)* |
| ***nnpfc_structure_split_layer_spatial_invariance_y**[ i ] [ j ]* | *u(1)* |
| ***nnpfc_structure_split_layer_spatial_invariance_z**[ i ] [ j ]* | *u(1)* |
| ***nnpfc_structure_split_num_layers**[ i ] [ j ]* | *u(8)* |
| *}* | |
| *}* | |
| ***nnpfc_structure_split_energy_info_present_flag[ i ]*** | *u(1)* |
| *if( nnpfc_structure_split_energy_info_present_flag[ i ] ) {* | |
| ***nnpfc_structure_split_energy_ratio_sgn_flag[ i ]*** | *u(1)* |
| ***nnpfc_structure_split_energy_ratio[ i ]*** | *u(8)* |
| *}* | |
| } | |
| } | |
| } | |
| **nnpfc_reserved_metadata_extension** | u(v) |
| } | |
| } | |

In a variant, all these metadata, optionally conditioned by a presence flag such as or similar to the syntax element nnpfc_backbone_info_flag or similar to the syntax element nnpfc_structure_split_info_flag or similar to the syntax elements nnpfc_structure_split_complexity_info_present_flag[ i ] and nnpfc_structure_split_energy_info_present_flag[ i ], are located in different places in the syntax, for example they may be conditioned by the metadata nnpfc_mode_idc and its different values, they may be conditioned by the metadata nnpfc_complexity_info_present_flag equal to 1.

In a variant, complexity information and energy information are associated to parts of the NNPF structure as defined with individual bitstreams as in the table below (in this case, it may correspond to nnpfc_mode_idc equal to 0).

| | |
|---|---|
| } | |
| } | |
| if( nnpfc_mode_idc = = 0) { | |
| **nnpfc_structure_split_info_flag** | u(1) |
| if( nnpfc_structure_split_info_flag ) { | |
| **nnpfc_structure_split_part_nb_minus1** | u(16) |
| for( i = 0; i < nnpfc_structure_split_part_nb_minus1 + 1; i++ ){ | |
| **nnpfc_structure_split_part_id**[ **i ]** | u[16] |
| **nnpfc_structure_split_part_size**[ **i ]** | st(v) |
| ***nnpfc_structure_split_complexity_info_present_flag[ i ]*** | *u(1)* |
| *if( nnpfc_structure_split_complexity_info_present_flag[ i ] ) {* | |
| ***nnpfc_structure_split_parameter_type_idc[ i ]*** | *u(2)* |
| *if( nnpfc_structure_split_parameter_type_idc[ i ] != 2 )* | |
| ***nnpfc_structure_split_log2_parameter_bit_length_minus3[ i ]*** | *u(2)* |
| ***nnpfc_structure_split_num_parameters_idc[ i ]*** | *u(6)* |
| ***nnpfc_structure_split_num_kmac_operations_idc[ i ]*** | *ue(v)* |
| ***nnpfc_structure_split_total_kilobyte_size[ i ]*** | *ue(v)* |
| ***nnpfc_structure_split_non_null_weight[ i ]*** | *u(6)* |
| ***nnpfc_structure_split_sparsity_idc[ i ]*** | *u(7)* |
| ***nnpfc_structure_split_weights_equal_one[ i ]*** | *u(6)* |
| ***nnpfc_structure_split_proportion_of_ones_idc[ i ]*** | *u(7)* |
| ***nnpfc_structure_split_max_layer_size_idc[ i ]*** | *u(8)* |
| ***nnpfc_structure_split_receptive_field_width[ i ]*** | *u(8)* |
| ***nnpfc_structure_split_receptive_field_height[ i ]*** | *u(8)* |
| ***nnpfc_structure_split_data_type_compatibility_flags[ i ]*** | *u(12)* |
| ***nnpfc_structure_split_minimum_data_type_idc[ i ]*** | *u(4)* |
| ***nnpfc_structure_split_simplified_architecture_present_flag[ i ]*** | *u(1)* |
| *if( nnpfc_structure_split_simplified_architecture_present_flag[ i ] ){* | |
| ***nnpfc_structure_split_num_layer_types[ i ]*** | *u(16)* |
| *for(j = 0; j* < *= nnpfc_structure_split_num_layer_types[ i ] ; j++ ){* | |
| ***nnpf_structure_split_layer_kernel_width**[ i ] [ j ]* | *u(8)* |
| ***nnpf_structure_split_layer_kernel_height**[ i ] [ j ]* | *u(8)* |
| ***nnpf_structure_split_layer_size**[ i ] [ j ]* | *u(8)* |
| ***nnpf_structure_split_layer_spatial_invariance_x**[ i ] [ j ]* | *u(1)* |
| ***nnpf_structure_split_layer_spatial_invariance_y**[ i ] [ j ]* | *u(1)* |
| ***nnpf_structure_split_layer_spatial_invariance_z**[ i ] [ j ]* | u(1) |
| ***nnpfc_structure_split_num_layers**[ i ] [ j ]* | *u(8)* |
| *}* | |
| *}* | |
| ***nnpfc_structure_split_energy_info_present_flag[ i ]*** | *u(1)* |
| *if( nnpfc_structure_split_energy_info_present_flag[ i ] ) {* | |
| ***nnpfc_structure_split_energy_ratio_sgn_flag[ i ]*** | *u(1)* |
| ***nnpfc_structure_split_energy_ratio[ i ]*** | *u(8)* |
| *}* | |
| } | |
| } | |
| } | |
| /* ISO/IEC 15938-17 bitstream */ | |
| if( nnpfc_mode_idc = = 0 ) { | |
| while( !byte_aligned( ) ) | |
| **nnpfc_alignment_zero_bit_b** | f(1) |
| for( i = 0; more_data_in_payload( ); i++ ) | |
| **nnpfc_payload_byte**[ i ] | b(8) |
| if( nnpfc_structure_split_info_flag ) { | |
| for( i = 0; i < nnpfc_structure_split_part_nb_minus1 + 1; i++ ){ | |
| while( !byte_aligned( ) ) | |
| **nnpfc_metadata_alignment_b_zero_bit** | f(1) |
| for( j = 0; j < nnpfc_structure_split_part_size; j++ ) | |
| **nnpfc_structure_split_payload_byte**[ i ][ j ] | |
| } | |
| } | |
| } | |
| } | |

In variants, all these metadata optionally conditioned by presence flags are located in different places in the syntax, for example they may be conditioned by the metadata nnpfc_mode_idc and its different values, they may be conditioned by the metadata nnpfc_complexity_info_present_flag equal to 1.

The semantics of the syntax elements are defined before.

### Implementation

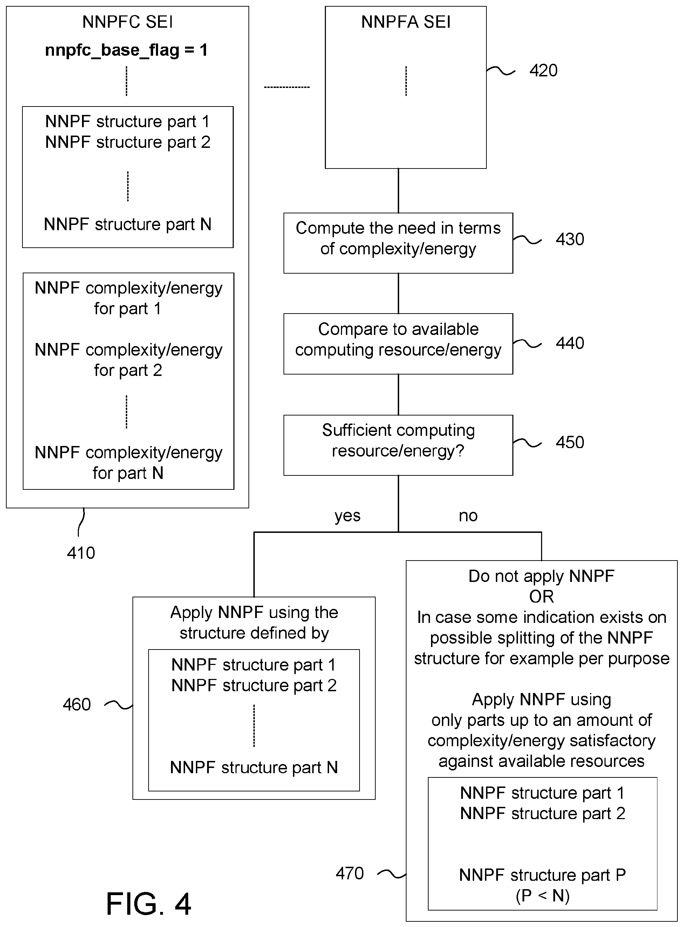

An example implementation of Emb.1 where information related to complexity and energy information per part is signalled in the NNPFC SEI messageis provided in FIG. 4.

In step 410, information related to an NNPF is signaled in an NNPFC SEI message, with a description of the NNPF structure as several parts, and related complexity/energy information per part in the NNPF structure.

In step 420, an NNPFA SEI message associated to the NNPFC (for instance, having a target id - signaled in the NNPFA as **nnpfa_target_id** - equal to the id in the NNPFC - signaled in the NNPFC as **nnpfc_id)** is sent to activate the NNPF. Upon reception of the NNPFA SEI message, in step 430, the complexity and energy information related to the whole structure is computed. In step 440, it is compared to the available computing resource or available energy at the device side. In step 450, it is checked whether the available computing resource or energy is enough to apply the NNPF. If it is sufficient, in step 460, the NNPF is applied. Otherwise in step 470, either the NNPF is not applied, or it is decided to apply it using only parts of its structure, in the case for example where information is available on which different sub structures (removing some of the parts) may achieve different sub-tasks. The decision to remove some of the parts is derived from the complexity/energy information of the removed parts so that the obtained substructure is compliant with the available resources.

### Emb.2 - Upon update of the global NNPF structure in the NNPFC or NNPFA SEI messages, signalling of complexity/energy information

In the following three variants, the NNPF structure may have been updated globally and the update is signalled in either the NNPFC SEI message (for example when nnpfc_base_flag equals to 0) or in the NNPFA SEI message.

### Variant. 1 - Signalling of the complexity/energy deltas compared to the previous values, in the NNPFC SEI message

In a variant, deltas of complexity and/or energy information for the whole structure of the NNPF, compared to the original complexity and/or energy information before the update of structure is signalled in the NNPFC SEI message. In this variant, such a signalling may be conditioned by nnpfc_base_flag equal to 0.

The proposed syntax is described in the below table, where only syntax elements specified as deltas as signalled. In an alternative, all syntax elements for the updated structure are signalled whether they are specified as deltas or not. The corresponding semantics is described before for syntax elements corresponding to delta for the whole NNPF structure.

| | |
|---|---|
| **...** | |
| **nnpfc_for_human_viewing_idc** | u(2) |
| **nnpfc_for_machine_analysis_idc** | u(2) |
| if( nnpfc_base_flag = = 0 ) { | |
| ***nnpfc_structure_split_complexity_info_present_flag*** | *u(1)* |
| *if( nnpfc_structure_split_complexity_info_present_flag ) {* | |
| ***nnpfc_structure_split_num_parameters_idc*** | *u(6)* |
| ***nnpfc_structure_split_num_parameters_sign_flag*** | *u(1)* |
| ***nnpfc_structure_split_num_kmac_operations_idc*** | *ue(v)* |
| ***nnpfc_structure_split_num_kmac_operations_sign_flag*** | *u(1)* |
| ***nnpfc_structure_split_total_kilobyte_size*** | *ue(v)* |
| ***nnpfc_structure_split_total_kilobyte_size_sign_flag*** | *u(1)* |
| ***nnpfc_structure_split_non_null_weight*** | *u(6)* |
| ***nnpfc_structure_split_non_null_weight_sign_flag*** | *u(1)* |
| ***nnpfc_structure_split_sparsity_idc*** | *u(7)* |
| ***nnpfc_structure_split_sparsity_sign_flag*** | *u(1)* |
| ***nnpfc_structure_split_weights_equal_one*** | *u(6)* |
| ***nnpfc_structure_split_weights_equal_one_sign_flag*** | *u(1)* |
| ***nnpfc_ structure_split_proportion_of_ones_idc*** | *u(7)* |
| ***nnpfc_structure_split_proportion_of_ones_sign_flag*** | *u(1)* |
| ***nnpfc_structure_split_max_layer_size_idc*** | *u(8)* |
| ***nnpfc_structure_split_max_layer_size_sign_flag*** | *u(1)* |
| ***nnpfc_structure_split_receptive_field_width*** | *u(8)* |
| ***nnpf_structure_split_receptive_field_width_sign_flag*** | *u(1)* |
| ***nnpfc_structure_split_receptive_field_height*** | *u(8)* |
| ***nnpfc_structure_split_receptive_field_height_sign_flag*** | *u(1)* |
| *}* | |
| ***nnpfc_structure_split_energy_info_present_flag*** | *u(1)* |
| *if( nnpfc_structure_split_energy_info_present_flag ) {* | |
| ***nnpfc_structure_split_energy_ratio_sgn_flag*** | *u(1)* |
| ***nnpfc_structure_split_energy_ratio*** | *u(8)* |
| *}* | |
| } | |
| **nnpfc_reserved_metadata_extension** | u(v) |
| } | |
| } | |

### Variant.2 - Signalling of the complexity/energy deltas compared to the previous values, in the NNPFA SEI message

In a variant, deltas of complexity and/or energy information for the whole structure of the NNPF, compared to the original complexity and/or energy information before the update of structure is signalled in the NNPFA SEI message.

The syntax may be described as in the below table.

| | |
|---|---|
| nn_post_filter_activation( payloadSize ) { | **Descriptor** |
| **nnpfa_target_id** | ue(v) |
| **nnpfa_cancel_flag** | u(1) |
| if( !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag ) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag**[ i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| ***nnpfa_structure_split_complexity_info_present_flag*** | *u(1)* |
| *if( nnpfa_structure_split_complexity_info_present_flag ) {* | |
| ***nnpfa_structure_split_parameter_type_idc*** | *u(2)* |
| *if( nnpfa_structure_split_parameter_type_idc != 2)* | |
| ***nnpfa_structure_split_log2_parameter_bit_length_minus3*** | *u(2)* |
| ***nnpfa_structure_split_delta_num_parameters_idc*** | *u(6)* |
| ***nnpfa_structure_split_delta_num_parameters_sign_flag*** | *u(1)* |
| ***nnpfa_structure_split_delta_num_kmac_operations_idc*** | *ue(v)* |
| ***nnpfa_structure_split_delta_num_kmac_operations_sign_flag*** | *u(1)* |
| ***nnpfa_structure_split_delta_total_kilobyte_size*** | *ue(v)* |
| ***nnpfa_structure_split_delta_total_kilobyte_sign_flag*** | *u(1)* |
| ***nnpfa_structure_split_delta_non_null_weight*** | *u(6)* |
| ***nnpfa_structure_split_delta_non_null_weight_sign_flag*** | *u(1)* |
| ***nnpfa_structure_split_delta_sparsity_idc*** | *u(7)* |
| ***nnpfa_structure_split_delta_sparsity_sign_flag*** | *u(1)* |
| ***nnpfa_structure_split_delta_weights_equal_one*** | *u(6)* |
| ***nnpfa_structure_split_delta_weights_equal_one_sign_flag*** | *u(1)* |
| ***nnpfa_structure_split_delta_proportion_of_ones_idc*** | *u(7)* |
| ***nnpfa_structure_split_delta_proportion_of_ones_sign_flag*** | *u(1)* |
| ***nnpfa_structure_split_delta_max_layer_size_idc*** | *u(8)* |
| ***nnpfa_structure_split_delta_max_layer_size_sign_flag*** | *u(1)* |
| ***nnpfa_structure_split_delta_receptive_field_width*** | *u(8)* |
| ***nnpfa_structure_split_delta_receptive_field_width_sign_flag*** | *u(1)* |
| ***nnpfa_structure_split_delta_receptive_field_height*** | *u(8)* |
| ***nnpfa_structure_split_delta_receptive_field_height_sign_flag*** | *u(1)* |
| ***nnpfa_structure_split_data_type_compatibility_flags*** | *u(12)* |
| ***nnpfa_structure_split_minimum_data_type_idc*** | *u(4)* |
| ***nnpfa_structure_split_simplified_architecture_present_flag*** | *u(1)* |
| *if( nnpfa_structure_split_simplified_architecture_present_flag ){* | |
| ***nnpfa_structure_split_num_layer_types*** | *u(16)* |
| *for(j = 0; j < = nnpfa_structure_split_num_layer_types ; j++ ){* | |
| ***nnpfa_structure_split_layer_kernel_width**[ j ]* | *u(8)* |
| ***nnpfa_structure_split_layer_kernel_height**[ j ]* | *u(8)* |
| ***nnpfa_structure_split_layer_size**[ j ]* | *u(8)* |
| ***nnpfa_structure_split_layer_spatial_invariance_x**[ j ]* | *u(1)* |
| ***nnpfa_structure_split_layer_spatial_invariance_y**[ j ]* | *u(1)* |
| ***nnpfa_structure_split_layer_spatial_invariance_z**[ j ]* | *u(1)* |
| ***nnpfa_structure_split_num_layers**[ j ]* | *u(8)* |
| *}* | |
| *}* | |
| ***nnpfa_structure_split_energy_info_present_flag*** | *u(1)* |
| *if( nnpfa_structure_split_energy_info_present_flag ) {* | |
| ***nnpfa_structure_split_delta_energy_ratio_sign_flag*** | *u(1)* |
| ***nnpfa_structure_split_ delta_energy_ratio*** | *u(8)* |
| *}* | |
| } | |
| } | |
| } | |

The semantics of the above syntax elements is described before.

In variants, all presence flags may be omitted, the syntax elements may be added in other parts of the syntax of the NNPFA SEI message, and some of the syntax elements may be omitted.

### Variant.3 - Signalling of the updated global complexity/energy in the NNPFA SEI message

In a variant, complexity and/or energy information related to the whole structure of the NNPF after the update of structure is signalled in the NNPFA SEI message.

The syntax may be described as in the below table (changes highlighted in italic).

| | |
|---|---|
| nn_post_filter_activation( payloadSize ) { | **Descriptor** |
| **nnpfa_target_id** | ue(v) |
| **nnpfa_cancel_flag** | u(1) |
| if( !nnpfa_cancel_flag ) { | |
| **nnpfa_persistence_flag** | u(1) |
| **nnpfa_target_base_flag** | u(1) |
| **nnpfa_no_prev_clvs_flag** | u(1) |
| if( nnpfa_persistence_flag ) | |
| **nnpfa_no_foll_clvs_flag** | |
| **nnpfa_num_output_entries** | ue(v) |
| for( i = 0; i < nnpfa_num_output_entries; i++ ) | |
| **nnpfa_output_flag**[ i ] | u(1) |
| if( more_data_in_payload( ) ) { | |
| **nnpfa_prompt_update_flag** | u(1) |
| if( nnpfa_prompt_update_flag ) { | |
| while( !byte_aligned( ) ) | |
| **nnpfa_alignment_zero_bit** | u(1) |
| **nnpfa_prompt** | st(v) |
| } | |
| **nnpfa_num_input_pic_shift** | ue(v) |
| ***nnpfa_structure_split_complexity_info_present_flag*** | *u(1)* |
| *if( nnpfa_structure_split_complexity_info_present_flag ) {* | |
| ***nnpfa_structure_split_parameter_type_idc*** | *u(2)* |
| *if( nnpfa_structure_split_parameter_type_idc != 2)* | |
| ***nnpfa_structure_split_log2_parameter_bit_length_minus3*** | *u(2)* |
| ***nnpfa_structure_split_num_parameters_idc*** | *u(6)* |
| ***nnpfa_structure_split_num_kmac_operations_idc*** | *ue(v)* |
| ***nnpfa_structure_split_total_kilobyte_size*** | *ue(v)* |
| ***nnpfa_structure_split_non_null_weight*** | *u(6)* |
| ***nnpfa_structure_split_sparsity_idc*** | *u(7)* |
| ***nnpfa_structure_split_weights_equal_one*** | *u(6)* |
| ***nnpfa_structure_split_proportion_of_ones_idc*** | *u(7)* |
| ***nnpfa_structure_split_max_layer_size_idc*** | *u(8)* |
| ***nnpfa_structure_split_receptive_field_width*** | *u(8)* |
| ***nnpfa_structure_split_receptive_field_height*** | *u(8)* |
| ***nnpfa_structure_split_data_type_compatibility_flags*** | *u(12)* |
| ***nnpfa_structure_split_minimum_data_type_idc*** | *u(4)* |
| ***nnpfa_structure_split_simplified_architecture_present_flag*** | *u(1)* |
| *if( nnpfa_structure_split_simplified_architecture_present_flag ){* | |
| ***nnpfa_structure_split_num_layer_types*** | *u(16)* |
| *for(j = 0; j < = nnpfa_structure_split_num_layer_types ; j++ ){* | |
| ***nnpfa_structure_split_layer_kernel_width**[ j ]* | *u(8)* |
| ***nnpfa_structure_split_layer_kernel_height**[ j ]* | *u(8)* |
| ***nnpfa_structure_split_layer_size**[ j ]* | *u(8)* |
| ***nnpfa_structure_split_layer_spatial_invariance_x**[ j ]* | *u(1)* |
| ***nnpfa_structure_split_layer_spatial_invariance_y** [ j ]* | *u(1)* |
| ***nnpfa_structure_split_layer_spatial_invariance_z**[ j ]* | *u(1)* |
| ***nnpfa_structure_split_num_layers**[ j ]* | *u(8)* |
| *}* | |
| *}* | |
| ***nnpfa_structure_split_energy_info_present_flag*** | *u(1)* |
| *if( nnpfa_structure_split_energy_info_present_flag ) {* | |
| ***nnpfa_structure_split_energy_ratio_sign_flag*** | *u(1)* |
| ***nnpfa_structure_split_energy_ratio*** | *u(8)* |
| *}* | |
| } | |
| } | |
| } | |

The semantics of the above syntax elements is described before.

In variants, all presence flags may be omitted, the syntax elements may be added in other parts of the syntax of the NNPFA SEI message, some of the syntax elements may be omitted.

### Implementation

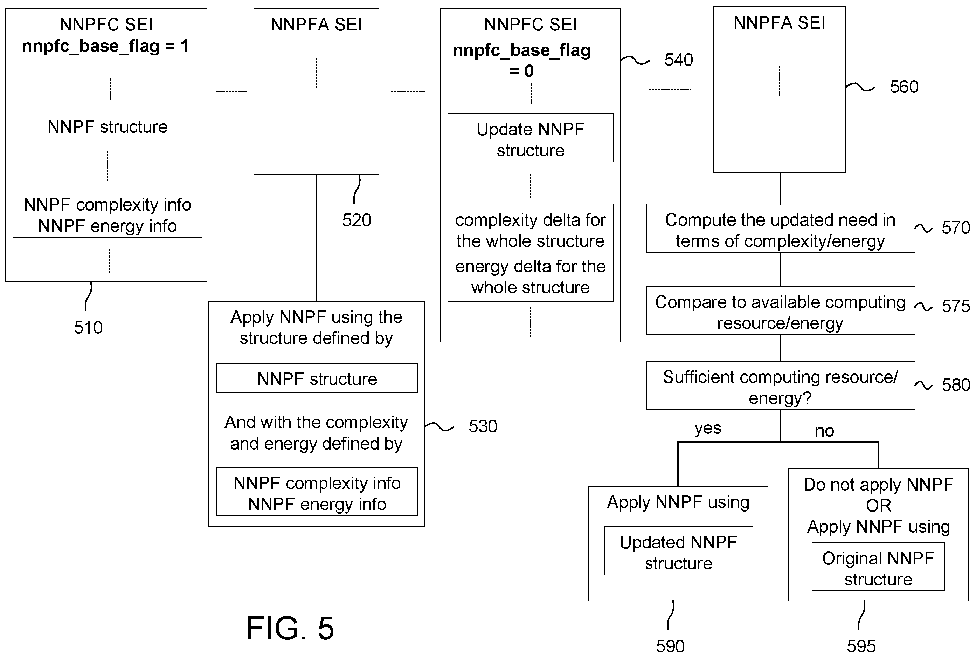

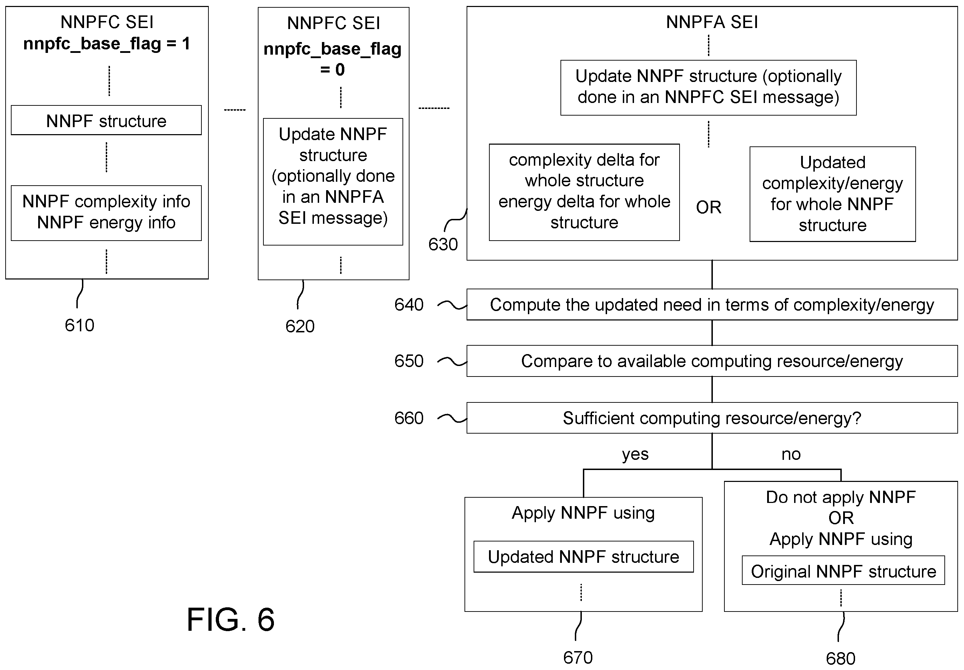

Example implementations of embodiment 2 for signalling of complexity/energy information upon update of the global NNPF structure in the NNPFC or NNPFA SEI message are provided in FIG. 5 and FIG. 6.

In FIG. 5, in step 510, information related to an NNPF is signaled in an NNPFC SEI message, with a description of the NNPF structure, and related complexity/energy information.

Corresponding to a description of variant #1 of embodiment #2, in step 520, an NNPFA SEI message associated to the NNPFC (for instance, having a target id - signaled in the NNPFA as **nnpfa_target_id** - equal to the id in the NNPFC - signaled in the NNPFC as **nnpfc_id)** is sent to activate the NNPF. Upon reception of the NNPFA SEI message, the NNPF is applied (530) with its original structure and corresponding to the signalled complexity/energy information. In step 540, a second NNPFC SEI message is signalled with information regarding an update of the whole NNPF structure and the corresponding complexity and energy information for the updated structure. In step 560, a second NNPFA SEI message is signalled to activate the NNPF with its updated structure and updated complexity/energy information. In step 570, the updated complexity/energy is computed. In step 575, the updated complexity/energy information is compared to the available computing resource or available energy at the device side. In step 580, it is checked whether the available computing resource or energy is enough to apply the updated NNPF. If it is sufficient, in step 590, the updated NNPF is applied. Otherwise in step 595, either the NNPF is not applied, or it is decided to apply it with its original structure.

In FIG. 6, in step 610, information related to an NNPF is signaled in an NNPFC SEI message, with a description of the NNPF structure, and related complexity/energy information. Corresponding to a description of variants #2 and #3 of embodiment #2, in step 620, an NNPFC SEI message is signalled, which optionally provides an update of the NNPF structure. In step 630, an NNPFA SEI message associated to the NNPFC (for instance, having a target id - signaled in the NNPFA as **nnpfa_target_id** - equal to the id in the NNPFC - signaled in the NNPFC as **nnpfc_id)** is sent to activate the NNPF. The NNPFA SEI message optionally provides an update of the NNPFC structure. It also provides corresponding updated complexity and energy information signalled either as deltas compared to the complexity/energy information of the original structure (Variant #2) or as the updated complexity/energy information for the whole updated structure of the NNPF (Variant #3). In step 640, the delta values are used to compute the updated need in terms of complexity and energy for the updated structure, and in step 650 it is compared to the available computing resource or available energy at the device side. In step 660, it is checked whether the available computing resource or energy is enough to apply the updated NNPF. If it is sufficient, in step 670, the NNPF is applied. Otherwise in step 680, either the NNPF is not applied, or it is decided to apply it with its original structure.

### Emb.3 - Upon update of a part of the NNPF structure in the NNPFC or NNPFA SEI messages, signalling of complexity/energy information

In the six variants described for Emb.3, the NNPF structure may have been updated per part (at least one part) and updates of the related complexity/energy information is signalled in either the NNPFC SEI message (for example when nnpfc _base_flag equals to 0) or in the NNPFA SEI message.

### Variant 1: Signalling of the complexity/energy of the updated parts in the NNPFC SEI message

In this variant, a certain number M (M is lower than the total number N of parts in the whole NNPF structure) of parts (at least one) of the NNPF structure were updated. For each updated part with indices 1 to M, the corresponding complexity and energy information is signalled in the NNPFC SEI message in a syntax similar to the ones in Emb.1 with the semantics as defined before for nnpfc _base_flag equal to 0.

### Variant 2 - Signalling of the complexity/energy deltas of the updated parts compared to the previous values, in the NNPFC SEI message

In this variant, deltas of complexity and/or energy information for the updated parts of the structure of the NNPF, compared to the original complexity and/or energy information before the update of the parts of the structure is signalled in the NNPFC SEI message. In this variant, such a signalling may be conditioned to nnpfc_base_flag equal to 0. The different syntax examples in Emb.1 remain valid with the changes in the semantics as for syntax elements corresponding to deltas per part of the updated NNPF structure.

### Variant 3: Signalling of the complexity/energy of the updated part in the NNPFA SEI message

In this variant, a certain number M (M is lower than the total number N of parts in the whole NNPF structure) of parts (at least one) of the NNPF structure were updated. For each updated part with indices 1 to M, the corresponding complexity and energy information is signalled in an NNPFA SEI message in a syntax similar to the ones in Emb.2-Variant.3 with the semantics as defined in before.

### Variant 4 - Signalling of the complexity/energy deltas of the updated part compared to the previous values, in the NNPFA SEI message

In this variant, a certain number M (M is lower than the total number N of parts in the whole NNPF structure) of parts (at least one) of the NNPF structure were updated. For each updated part with indices 1 to M, the corresponding deltas in terms of complexity and energy information compared to the original values for each part in the original structure is signalled in an NNPFA SEI message in a syntax similar to the ones in Emb.2-Variant.2 with the semantics as defined before.

### Variant 5: Signalling of the complexity/energy of the whole structure in the NNPFA SEI message

In a variant, complexity and/or energy information related to the whole structure of the NNPF after the update of parts of the structure is signalled in the NNPFA SEI message. The syntax is similar to the ones in Emb.2-Variant.3 and the semantics is defined before.

### Variant 6 - Signalling of the complexity/energy deltas of the whole structure compared to the previous values, in the NNPFA SEI message

In a variant, deltas of complexity and/or energy information related to the whole structure of the NNPF after the update of parts of the structure is signalled in the NNPFA SEI message. The syntax is similar to the ones in Emb.2-Variant.2 and the semantics is defined before.

### Implementation

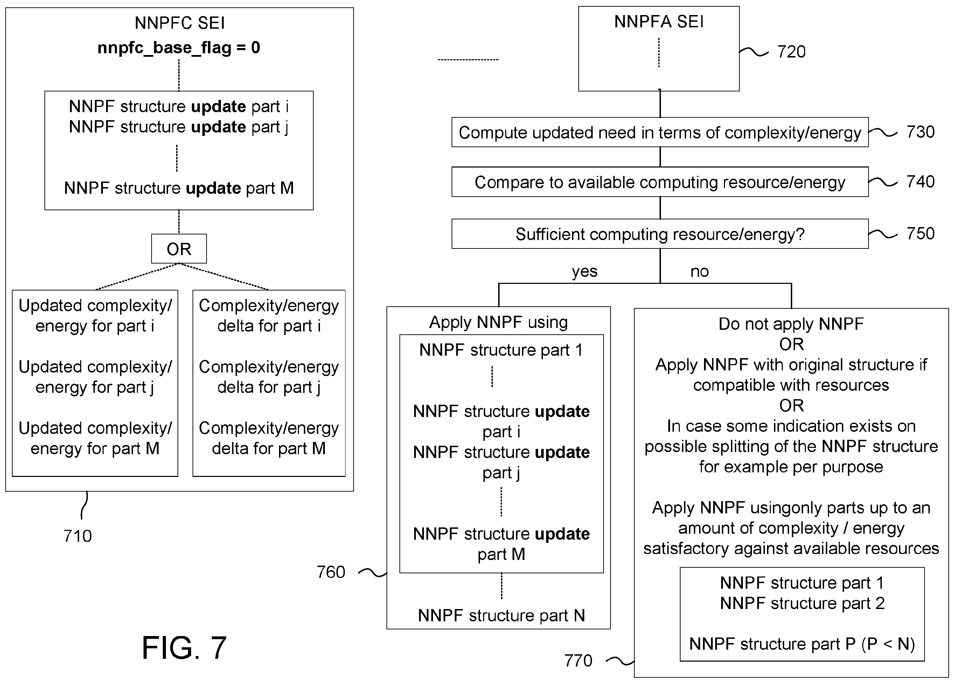

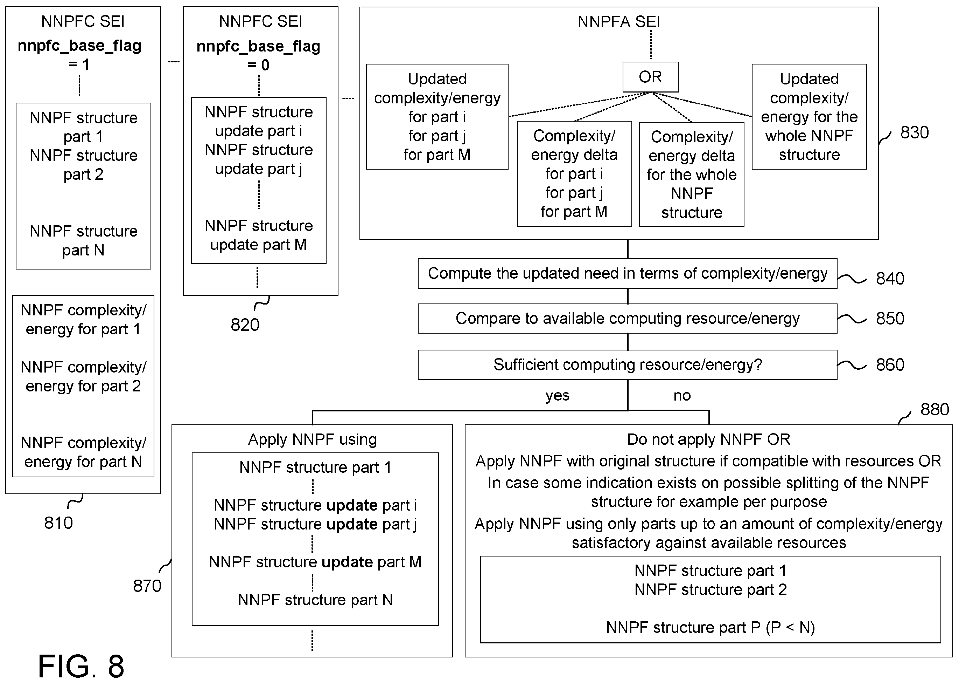

Example implementations of Emb. 3 for signalling of complexity/energy information upon update of a part of the NNPF structure in the NNPFC or NNPFA SEI message are provided in FIG. 7 and FIG. 8.

The process illustrated in FIG. 7 can be implemented subsequent to the process illustrated in FIG. 4. In FIG. 7, corresponding to a description of variants #1 and #2 of embodiment #3, in step 710, a second NNPFC SEI message is signalled which contains information related to an update of some of the parts of the NNPF structure, together with some complexity/energy related information per updated part or as deltas of complexity/energy per updated part. In step 720, a second NNPFA SEI message associated to the NNPFC (for instance, having a target id - signaled in the NNPFA as **nnpfa_target_id** - equal to the id in the NNPFC - signaled in the NNPFC as **nnpfc_id)** is sent to activate the NNPF with its updated structure and updated complexity/energy information. In step 730, the updated complexity/energy information for the whole NNPF structure is computed. It is compared in step 740 to the available computing resource or available energy at the device side. In step 750, it is checked whether the available computing resource or energy is enough to apply the updated NNPF. If it is sufficient, in step 760, the NNPF is applied with the updated structure. Otherwise in step 770, either the NNPF is not applied, or it is decided to apply it with its original structure, or with a modified structure which only incorporates some of the updated parts depending on whether the modified structure satisfies the requirements (or constraints) in terms of complexity/energy and corresponds to a structure that satisfies the expectations in terms of results for some of the target tasks/purposes of the NNPF.

In FIG. 8, corresponding to a description of variants #3 to #6 of embodiment #3, in step 810, information related to an NNPF is signaled in an NNPFC SEI message, with a description of the NNPF structure, and related complexity/energy information. In step 820, a second NNPFC SEI message is sent with an updated NNPF structure per part. In step 830, an NNPFA SEI message associated to the NNPFC (for instance, having a target id - signaled in the NNPFA as **nnpfa_target_id** - equal to the id in the NNPFC - signaled in the NNPFC as **nnpfc_id)** is sent to activate the NNPF. The NNPFA SEI message also contains information related to the complexity/energy information of the updated structure of the NNPF described either as - variant #3 - the complexity/energy information of the updated parts in the NNPF structure, or - variant #4 - the deltas of complexity/energy information while comparing the updated and original versions of the updated parts, or - variant #5 - the updated complexity/energy information of the whole updated structure, or - variant #6 - the deltas of complexity/energy information while comparing the updated and original versions of the whole structure. In step 840, the updated complexity/energy needed to run the updated NNPF is computed and in step 850 the updated complexity/energy information is compared to the available computing resource or available energy at the device side. In step 860, it is checked whether the available computing resource or energy is enough to apply the updated NNPF. If it is sufficient, in step 870, the updated NNPF is applied. Otherwise in step 880, either the NNPF is not applied, or it is decided to apply it with its original structure, or with a modified structure which only incorporates some of the updated parts depending on whether the modified structure satisfies the requirements in terms of complexity/energy and corresponds to a structure that satisfies the expectations in terms of results for some of the target tasks/purposes of the NNPF.

In the above embodiments, when a specific characteristic is not sent in the NNPFA SEI message, it may be understood that its value is set back to a default value, for example in the case of deltas, the default value can be 0, meaning that there is no difference in terms of complexity/energy for the given characteristic.

In an embodiment, the updated complexity/energy information is sent in another structure than the NNPFA SEI message, for example, in a new SEI message.

### Emb.4 - Upon update of NNPF's purpose in the NNPFC or NNPFA SEI messages, signalling of complexity/energy information

In this embodiment, the purpose of the NNPF (signalled through the syntax element nnpfc_purpose in the syntax of the NNPFC SEI message) may be updated. For example, the NNPF was first specified with the purpose of both resolution upsampling and general quality enhancement. The NNPF purpose is updated, for example through the signalling of another NNPFC SEI message or through the signalling of another NNPFA SEI message, to only general quality enhancement. Such a modification of purpose of the NNPF may imply a modification in terms of complexity/energy information. For example, part of the existing NNPF structure may be skipped if resolution upsampling is not needed anymore, resulting in a lower complexity and a lower energy consumption.

In such an embodiment, the updated information in terms of complexity/energy may be signalled either in the NNPFC SEI message indicating the change of purpose. In this case the new complexity/energy information may optionally be conditioned by a flag indicating the change of purpose. The updated information in terms of complexity/energy may also be signalled in a subsequent NNPFA SEI message following the NNPFC SEI message indicating the change of purpose. In another variant, the updated complexity/energy information may be sent in an NNPFA SEI message, also indicating the updated purpose. In each of these variants, the updated complexity/energy information may be sent either as the new values in terms of complexity/energy or as deltas while comparing the updated and original values.

### Emb.5 - Upon update of the NNPF's purpose and when the update of purpose corresponds to an update of the structure of the NNPF, signalling of updated complexity/energy information

In an embodiment, the update of purpose is accompanied with an update of the NNPF structure signalled in either the NNPFC or NNPFA SEI messages. In this embodiment, all variants above may be envisioned. Additionally, the complexity/energy information may be understood as related to either the updated parts in the NNPF structure (updated values or deltas), or related to the whole updated structure.

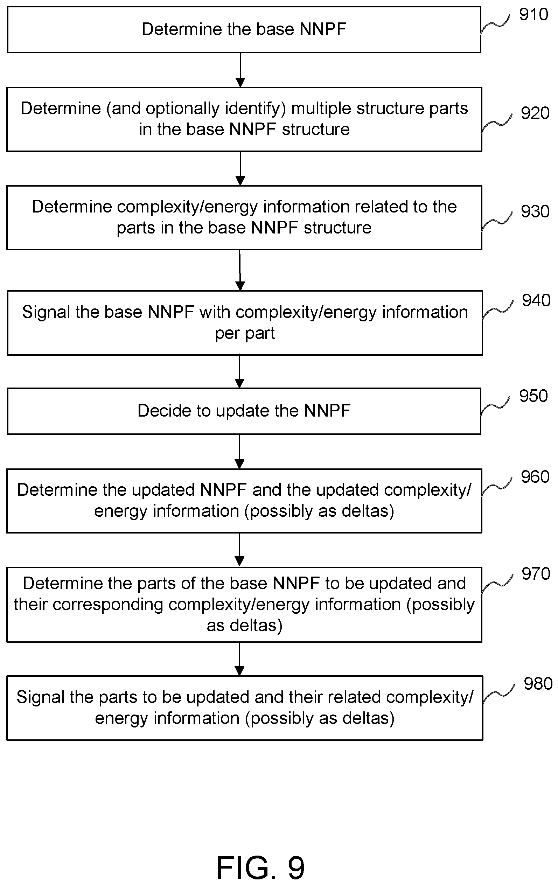

FIG. 9 illustrates a method of updating the NNPF structure at the encoder side, according to one embodiment. In step 910, a first base NNPF is determined with its corresponding structure, i.e., its architecture, weights and parameters. In step 920, several structure parts are determined and optionally identified in the base NNPF structure, which allow to split or divide the base NNPF structure.

In step 930, complexity and/or energy information related to the structure parts of the base NNPF are determined. In step 940, the base NNPF is signalled, possibly with a multiple-part structure. This structure may be signalled within the bitstream, for example as several URIs or several sub-bitstreams, or any other means. The base NNPF is signalled with complexity/energy information per part in the base NNPF structure. The structure and the complexity/energy information may be signalled in a syntax, for example, an SEI message (e.g., an NNPFC SEI message).

In step 950, it is decided to update the NNPF, for example, when the purpose of the NNPF is changed. In step 960, an updated version of the NNPF structure is determined together with updated complexity/energy information (possibly as deltas). The purpose of the NNPF might be updated to allow using it for different tasks, for example, resolution upsampling or quality enhancement. Having the possibility to update a single NNPF capable of proceeding to two or more different tasks would allow to avoid sending, storing and using two or more NNPFs each responsible for a single task. Updating the purpose of an NNPF may result in less memory storage and less transmission of data compared to having individual NNPFs per task or purpose.

In step 970, the individual parts of the NNPF structure that need to be updated are determined and identified, together with their corresponding complexity/energy information (possibly as deltas). In step 980, the parts that need to be updated and their related complexity/energy information may be signalled within the bitstream, for example, as several URIs or several sub-bitstreams, or any other means. The update parts and the complexity/energy information may be signalled in a syntax, for example an SEI message (e.g., an NNPFC SEI message, an NNPFA SEI message). Optionally, corresponding identifiers of the update parts are signalled.

In FIG. 9, the encoder sends both the base NNPF and the updated parts to update the base NNPF. In another example, the encoder may keep using the base NNPF without the update. In this case, we don't need to implement steps 950-980 at the encoder side.

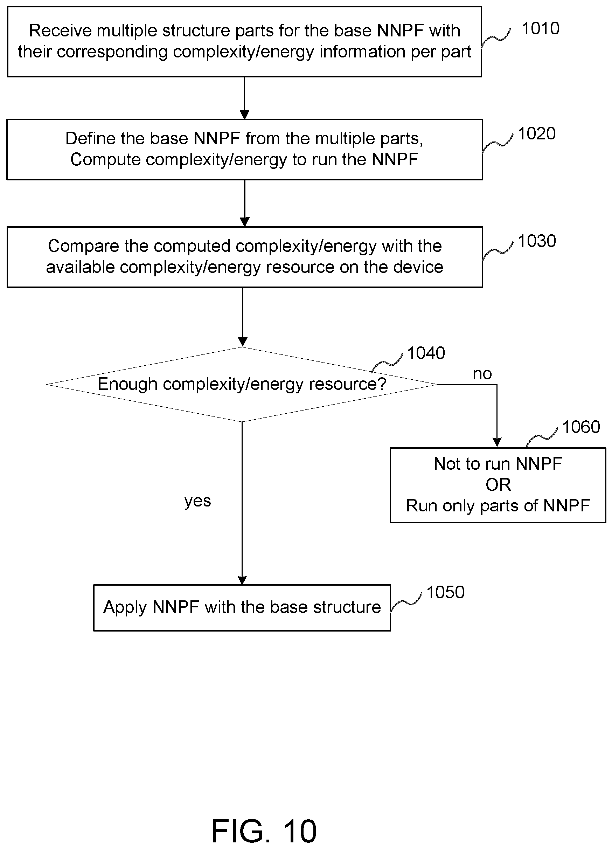

FIG. 10 illustrates a method of applying the NNPF structure at the decoder side, according to one embodiment. In step 1010, multiple parts of a first base NNPF structure with their corresponding complexity/energy information per part are received in the bitstream. The base NNPF structure is received in the bitstream, for example, as several URIs or several sub-bitstreams, or any other means. The multiple parts and corresponding complexity/energy information may be signalled in a syntax, for example, an SEI message (e.g., an NNPFC SEI message, an NNPFA SEI message). Optionally, corresponding identifiers of the parts are received.

In step 1020, a base NNPF structure is built from the received multiple parts and optionally the corresponding identifiers, and the needed complexity/energy to run the NNPF is computed. In step 1030, the computed complexity/energy is compared to the available complexity/energy resource on the device. In step 1040, it is checked whether there is enough complexity/energy resource on the device to apply the NNPF. If yes, in step 1050, the NNPF with its base structure is applied. If no, in step 1060, it is decided either not to run the NNPF, or to run only parts of the NNPF, depending on whether running these parts is compliant in terms of complexity/energy with the available resources and depending on whether running these parts corresponds to a subtask of the NNPF or a less accurate version of the task for which the NNPF was built.

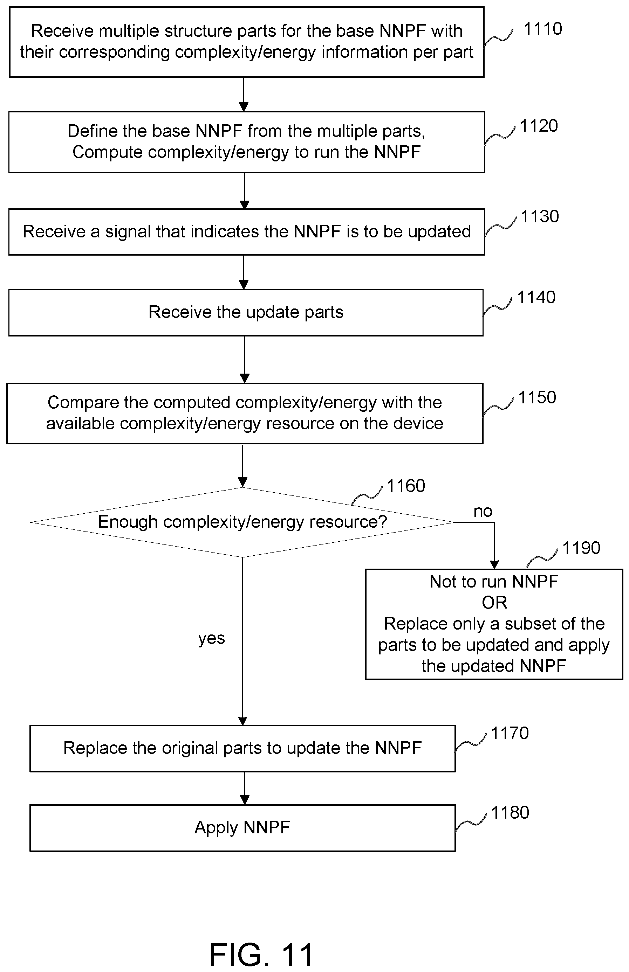

FIG. 11 illustrates a method of updating the NNPF structure at the decoder side, according to one embodiment. In step 1110, multiple parts of a first base NNPF structure with their corresponding complexity/energy information per part are received in the bitstream. The base NNPF structure is received in the bitstream, for example as several URIs or several sub-bitstreams, or any other means. The multiple parts and corresponding complexity/energy information may be signalled in a syntax, for example, an SEI message (e.g., an NNPFC SEI message, an NNPFA SEI message). Optionally, corresponding identifiers of the parts are received.

In step 1120, a base NNPF structure is built from the received multiple parts and optionally the corresponding identifiers, and the needed complexity/energy to run the NNPF is computed. In step 1130, a signal is received to indicate that the base NNPF needs to be updated. This signal may be carried through a message, for example an SEI message, an NNPFC SEI message, an NNPFA SEI message. In step 1140, the parts that need to be used to update in the NNPF structure are received within the bitstream, for example as several URIs or several sub-bitstreams, or any other means. The parts are received with their corresponding updated complexity/energy information (possibly as deltas). The multiple update parts and the complexity/energy information may be received in a message, for example an SEI message, an NNPFC SEI message, an NNPFA SEI message. Optionally, corresponding identifiers of the update parts are received.

In step 1150, the computed complexity/energy is compared to the available complexity/energy resource on the device. In step 1160, it is checked whether there is enough complexity/energy resource on the device to apply the NNPF. If yes, in step 1170, the parts that need to be updated in the base NNPF structure are replaced by the update parts received in step 1140, possibly with the help of their respective identifiers. In step 1180, the NNPF is applied for example for resolution upsampling, chroma upsampling, temporal resampling, tone mapping, quality enhancement, etc., with its updated structure. If no, it is decided either not to run the NNPF in step 1190, or to replace only a subset of the parts to be updated, depending on whether running these parts is compliant in terms of complexity/energy with the available resources and depending on whether running these parts corresponds to a subtask of the NNPF or a less accurate version of the task for which the NNPF was built. The NNPF is applied for example for resolution upsampling, chroma upsampling, temporal resampling, tone mapping, quality enhancement, etc., with its updated structure. It is to be understood that in step 430 of FIG. 4, step 570 of FIG. 5, step 640 of FIG. 6, step 730 of FIG. 7, step 840 of FIG. 8, step 1030 of FIG. 10 and step 1150 of FIG. 11, the computed complexity/energy information may correspond either to the complexity/energy needed to run the NNPF possibly updated, or to the complexity/energy needed to proceed to the subsequent steps after applying the NNPF (possibly updated), as a consequence of the application of the NNPF, or to the sum of both the complexity/energy needed to run the NNPF and the complexity/energy needed in the subsequent steps after applying the NNPF.

In the above, many syntax elements are described. It should be noted their names can be replaced by other wordings.

In all the above embodiments, it is to be understood that the URIs or sub-bitstreams used to define the parts of the base NNPF structure or the update parts can be specified using other standards than the ones mentioned above. Also, it is to be understood that other means than URIs or sub-bistreams may be used to signal an NNPF structure as sub-parts or to signal some parts of an NNPF structure that need to be updated.

In the above, we describe how the NNPF structure can be divided into multiple parts and how to update one or more individual parts. It is noted that the splitting into parts and corresponding update apply to all kinds of NNs, not just NN for post filters as defined above (e.g., in the NNPFC SEI messages). For example, it may apply for NNs used as preprocessing steps, NNs used for data (e.g., video) compression.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the pre-processor and post-processor described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. A bitstream that includes one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter is used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), a bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A method of processing a video at a device, comprising:
obtaining a plurality pieces of information for a first neural network, wherein each piece of the plurality pieces of information indicates at least one of complexity and energy associated with a structure part of a plurality of structure parts of the first neural network;
accessing at least one of available computing resources and available energy of the device; and
responsive to determining a subset of structure parts of the first neural network satisfies a constraint of the at least one of available computing resources and available energy of the device, processing the video with a second neural network, wherein the second neural network only includes the subset of structure parts of the first neural network.

2. An apparatus, comprising one or more processors and at least one memory coupled to the one or more processors, wherein the one or more processors are configured to:
obtain a plurality pieces of information for a first neural network, wherein each piece of the plurality pieces of information indicates at least one of complexity and energy associated with a structure part of a plurality of structure parts of the first neural network;
access at least one of available computing resources and available energy of the apparatus; and
responsive to determining a subset of structure parts of the first neural network satisfies a constraint of the at least one of available computing resources and available energy of the apparatus, process a video with a second neural network, wherein the second neural network only includes the subset of structure parts of the first neural network.

3. The method of claim 1, or the apparatus of claim 2, wherein the first neural network is used as a post filter.

4. The method of claim 1 or 3, or the apparatus of claim 2 or 3, wherein the first neural network is a base neural network.

5. The method of claim 1 or 3, or the apparatus of claim 2 or 3, wherein the first neural network is an updated neural network.

6. The method of claim 5, or the apparatus of claim 5, wherein each piece of the plurality pieces of information indicates at least one of updated complexity and energy consumption of a structure part of the updated neural network.

7. The method of claim 5, or the apparatus of claim 5, wherein each piece of the plurality pieces of information indicates a difference between at least one of updated complexity and energy consumption of a structure part of the updated neural network and at least one of complexity and energy of a corresponding structure part of a base neural network.

8. The method of any one of claims 1 and 3-7, or the apparatus of any one of claims 2-7, wherein the structure part is received through an NNPFC message or an NNPFA message.

9. The method of any one of claims 1 and 3-8, or the apparatus of any one of claims 2-8, wherein a piece of information of the plurality pieces of information corresponds to at least one of the following:
(1) at least one of complexity and energy consumption needed to run a corresponding structure part, and
(2) at least one of complexity and energy consumption needed to proceed to subsequent steps after running the corresponding structure part, as a consequence of running the corresponding structure part.

10. A method of video encoding, comprising:
dividing a neural network into a plurality of structure parts;
signaling the plurality of structure parts of the neural network; and
signaling a plurality pieces of information for the neural network, wherein each piece of the plurality pieces of information indicates at least one of complexity and energy consumption associated with a structure part of the plurality of structure parts of the neural network.

11. An apparatus for video encoding, comprising one or more processors and at least one memory coupled to the one or more processors, wherein the one or more processors are configured to:
divide a neural network into a plurality of structure parts;
signal the plurality of structure parts of the neural network; and
signal a plurality pieces of information for the neural network, wherein each piece of the plurality pieces of information indicates at least one of complexity and energy consumption associated with a structure part of the plurality of structure parts of the neural network.

12. The method of claim 10, or the apparatus of claim 11, wherein the neural network is used as a post filter.

13. The method of any one of claims 10 and 12, or the apparatus of any one of claims 11-12, wherein the structure part is signaled through an NNPFC message or an NNPFA message.

14. The method of any one of claims 10, 12 and 13, or the apparatus of any one of claims 11-13, wherein a piece of information of the plurality pieces of information corresponds to at least one of the following:
(1) at least one of complexity and energy consumption needed to run a corresponding structure part, and
(2) at least one of complexity and energy consumption needed to proceed to subsequent steps after running the corresponding structure part, as a consequence of running the corresponding structure part.

15. A signal, formatted to include:
a plurality of structure parts of a neural network; and
a plurality pieces of information for the neural network, wherein each piece of the plurality pieces of information indicates at least one of complexity and energy consumption associated with a structure part of the plurality of structure parts of the neural network.
